# EUROPÄISCHE PATENTSCHRIFT

(11) **EP 3 665 714 B1**
(45) Veröffentlichungstag und Bekanntmachung des Hinweises auf die Patenterteilung: **22.05.2024**
(21) Anmeldenummer: 18755190.8
(22) Anmeldetag: 13.08.2018
(51) Int. Cl.: H01H 39/00, F42B 3/00, H01H 37/74

(54) **PYROTECHNISCHE TRENNEINRICHTUNG, SYSTEM ZUM ELEKTRISCHEN LADEN EINER ELEKTRISCHEN ENERGIEZELLE, MOBILGERÄT UND LADEGERÄT**
PYROTECHNICAL CUTTER, SYSTEM FOR ELECTRICAL CHARGING OF AN ELECTRICAL POWER CELL, A MOBILE DEVICE AND A CORRESPONDING CHARGER
DISPOSITIF DE SÉPARATION PYROTECHNIQUE, SYSTÈME POUR CHARGER ÉLECTRIQUEMENT D'UNE CELLULE ÉNERGÉTIQUE ÉLECTRIQUE, APPAREIL MOBILE ET CHARGEUR CORRESPONDANT

(30) Priorität: 11.08.2017 DE 102017118416; 29.03.2018 DE 202018101783 U
(43) Veröffentlichungstag der Anmeldung: 17.06.2020
(73) Patentinhaber: RWS GmbH, 90765 Fürth (DE)
(72) Erfinder: SAX, Oliver, 90513 Weiherhof (DE); BLEY, Ulrich, 90766 Fürth (DE); WINTER, Andreas, 90768 Fürth (DE)
(74) Vertreter: Schmid, Nils T.F.
(86) Internationale Anmeldenummer: PCT/EP2018/071934
(87) Internationale Veröffentlichungsnummer: WO 2019/030415

(56) Entgegenhaltungen:
- WO-A1-87/06777
- CN-A- 105 449 825
- DE-A1-102010 035 684
- DE-A1-102015 014 428
- DE-U1- 29 723 872
- US-A1- 2010 328 014

## Beschreibung

Die Erfindung betrifft eine pyrotechnische Trennungseinrichtung zum Beeinträchtigen, vorzugsweise Unterbrechen, einer elektrischen Ladekopplung zwischen einer aufladbaren elektrischen Energiequelle und einer elektrischen Energieversorgung. Des Weiteren betrifft die Erfindung ein System zum elektrischen Laden einer Energiezelle, ein Mobilgerät mit einer elektrisch aufladbaren Energiezelle und einem diese aufnehmenden Gerätegehäuse, sowie ein elektrisches Ladegerät zum Aufladen einer elektrisch aufladbaren Energiezelle.

Pyrotechnische Mittel, Stoffe, Zusammensetzungen oder Stoffgemische sind bekannt und können nach deren Zündung oder Anzündung eine vorab bestimmte pyrotechnische Wirkung entfalten. Der Einsatz von pyrotechnischen Mitteln zur Trennung eines elektrischen Kontakts von einer Batterie ist bereits angedacht. Aus EP 1 890 986 B1 ist im Allgemeinen ein Trennelement bekannt, das ein pyrotechnisches Mittel, insbesondere ein pyrotechnisches, thermisches Frühzündmittel, umfasst, um an einer Batterieklemme positioniert zu sein. Batterieklemmen sind hülsenförmige Anschlussstücke beispielsweise für Kraftfahrzeugbatterien, um einen elektrischen Anschluss und eine Entkopplung auf einfache Weise zu realisieren.

US 2010/328014 A1 offenbart einen elektrischen Stromkreisbrecher für ein Fahrzeug. DE 297 23 872 U1 offenbart einen Notabschalter für elektrische Stromkreise. WO 87/06777 A1 offenbart eine Schutzeinrichtung in elektrisch betriebenen Geräten. CN 105 449 825 A mobile Solarenergiequelle. DE 10 2015 014428 A1 betrifft thermische Frühzündmittel. Die DE 10 2010 035684 A1 betrifft eine elektrische Trennvorrichtung sowie ein Verfahren zum elektrischen Trennen von Anschlussteilen mit Hilfe einer Trennvorrichtung.

Es ist Aufgabe der Erfindung, Nachteile des Standes der Technik zu überwinden, insbesondere eine pyrotechnische Trennungseinrichtung bereitzustellen, mit der es möglich ist, mit geringem Fertigungsaufwand eine für den Masseneinsatz einzusetzende Entkopplungsfunktion bei geringem Fertigungsaufwand bereitzustellen, die eine ausreichend zuverlässige Trennungswirkung sicherstellt und eine Vielzahl von Einsatzmöglichkeiten besitzt, insbesondere das Überladen einer elektrischen Energiezelle insbesondere mit einem elektrochemischen Speicher zu vermeiden, um eine unkontrollierte insbesondere chemische Kettenreaktion an der Energiezelle auszuschließen.

Diese Aufgabe wird durch die Merkmale von Anspruch 1 gelöst. Danach ist eine pyrotechnische Trennungseinrichtung vorgesehen, die dazu dient, eine elektrische Ladekopplung zwischen einer aufladbaren elektrischen Energiezelle, die einen elektrochemischen Energiespeicher und einen Energiewandler umfasst, und einer elektrischen Energieversorgung, zu beeinträchtigen, vorzugsweise zu unterbrechen. Die erfindungsgemäße pyrotechnische Trennungseinrichtung kann für verschiedene Ladesysteme eingesetzt werden, bei denen eine Ladefunktion kontaktlos, über elektrische Leitungen oder auf sonstige Weise an der Energiezelle ausgeübt wird. Bei einem Ladesystem ist zumindest ein proximal der Energiezelle vorliegender, elektrisch leitfähiger Verbindungsabschnitt, wie ein Kabelabschnitt, vorgesehen, der insbesondere für die erfindungsgemäße Positionierung in der hermetisch abgeschlossenen, pyrotechnischen Trennungseinrichtung geeignet ist. Die erfindungsgemäße pyrotechnische Trennungseinrichtung umfasst einen elektrisch leitfähigen Verbindungsabschnitt, der insbesondere eine Längserstreckung aufweist und mit der aufzuladenden Energiezelle elektrisch verbunden oder zumindest verbindbar ist. Der elektrisch leitfähige Verbindungsabschnitt soll zur Überwindung eines Abstands zwischen zwei auf einem Ladepfad zwischen der Energiezelle und dem Ladegerät befindlichen Stellen dienen. Der elektrisch leitfähige Verbindungsabschnitt ist in einem Gehäuse angeordnet und verbindet zwei in der Gehäusewand insbesondere sich diametral gegenüberliegende Anschlüsse der pyrotechnischen Trennungseinrichtung, um direkt oder indirekt mit der Energiezelle einerseits und dem Ladegerät andererseits elektrisch verbunden zu werden. Der langgestreckte Verbindungsabschnitt der pyrotechnischen Trennungseinrichtung kann beispielsweise als elektrisch leitfähiges Kabel insbesondere aus Metall und/oder als eine auf einer Leiterplatine/Substrat aufgedruckte Leiterbahn gebildet sein. Andere leitfähige Verbindungsabschnitte können vorgesehen sein, um zumindest eine elektrische Kopplung zwischen zwei voneinander distalen Punkten zu erstellen und vorzugsweise die zwei Gehäuseanschlüsse zu überbrücken. Der elektrisch leitfähige Verbindungsabschnitt ist dazu ausgelegt, Ladeenergie von der Energieversorgung durch das Gehäuse hindurch an die elektrische Energiezelle zu übertragen.

Des Weiteren umfasst die pyrotechnische Trennungseinrichtung das insbesondere druckdicht geschlossene oder verschließbare Gehäuse, in dem der elektrisch leitfähige Verbindungsabschnitt angeordnet ist. Vorzugsweise ist das Gehäuse fluiddicht, insbesondere flüssigkeits- und/oder gasdicht, ausgebildet, kann allerdings, falls gewünscht, eine definierte, insbesondere semipermeable Gasdurchlässigkeit vorzugsweise nur nach innen aufweisen. Das Gehäuse soll den leitfähigen Verbindungsabschnitt vollständig umschließen. Es sei klar, dass der in dem Gehäuse befindliche elektrisch leitfähige Verbindungsabschnitt die elektrische Ladekopplung mit der Energiezelle und dem Ladegerät (in einem deaktivierten Zustand, was pyrotechnische Funktion angeht) zulassen muss. Des Weiteren ist bei der erfindungsgemäßen pyrotechnischen Trennungseinrichtung in dem Gehäuse zusätzlich ein pyrotechnisches Mittel untergebracht. Das pyrotechnische Mittel ist aus einer pyrotechnischen Substanz oder Mischung zusammengesetzt, die nach Aktivierung die pyrotechnische Wirkung entfaltet. Die Wahl der pyrotechnischen Substanz hängt insbesondere vom Anwendungsgebiet (der gewünschten pyrotechnischen Energieumsetzung) sowie von der Dimensionierung des Gehäuses und des in dem Gehäuse angeordneten elektrisch leitfähigen Verbindungsabschnitts ab. Bei der erfindungsgemäßen pyrotechnischen Trennungseinrichtung ist das pyrotechnische Mittel, das in dem Gehäuse untergebracht ist, dazu ausgelegt und/oder derart ansteuerbar, dass es seine pyrotechnische Wirkung insbesondere erst bei Erreichen eines vorbestimmten Betriebszustands entfaltet. Dabei kann der Betriebszustand ein spezifischer Zustand der Energiezelle und/oder des Ladegeräts oder eines weiteren Geräts sein, das in der Nähe der Energiezelle oder des Ladegeräts angeordnet ist oder das die Energiezelle umfasst. Bei einer bevorzugten Ausführung ist das pyrotechnische Mittel dazu ausgelegt, erst bei Erreichen des vorbestimmten Betriebszustands umzusetzen, was durch die Auswahl des spezifischen Materials für das pyrotechnische Mittel eingestellt werden kann. Vorzugsweise ist der festlegbare Auslöseparameter die Temperatur, der das pyrotechnische Mittel ausgesetzt ist. Alternativ kann die Entfaltung bei dem vorbestimmten Betriebszustand auch durch eine hinzugefügte Steuerung erreicht werden, bei der der Auslöseparameter temperaturunabhängig gewählt ist, beispielsweise durch ein entsprechendes elektrisches Steuersignal, das wiederum von einer Messgröße, wie Temperatur, Druck, Feuchtigkeit, Geschwindigkeit, Beschleunigung, abhängen kann. Ein Beispiel für ein pyrotechnisches Mittel, das bei Erreichen eines bestimmten thermischen Betriebszustands aktiviert ist, ist das sogenannte pyrotechnische Frühzündmittel, das später noch detaillierter erläutert wird. Dabei ist ein von der an dem pyrotechnischen Mittel herrschenden Temperatur abhängiger Betriebsparameter wesentlich. Erfindungsgemäß ist das pyrotechnische Mittel in dem Gehäuse derart dem elektrisch leitfähigen Verbindungsabschnitt zugeordnet, dass die pyrotechnische Wirkung des pyrotechnischen Mittels, also nach dessen Aktivierung, die elektrische Leitfähigkeit des Verbindungsabschnitts innerhalb des Gehäuses zumindest einschränkt, vorzugsweise vollständig aufhebt. Insbesondere soll das pyrotechnische Mittel derart eingestellt sein, dass bei dessen Zündung oder Anzündung eine derart große thermische Energie freigesetzt wird, dass der elektrisch leitfähige Verbindungsabschnitt zumindest teilweise vollständig umgesetzt wird, so dass die elektrische Kopplung durch den Verbindungsabschnitt zwischen dem elektrischen Eingang und Ausgang des Gehäuses aufgehoben ist. Aufgrund der Unterbringung des elektrisch leitfähigen Verbindungsabschnitts in dem Gehäuse, das noch Volumen für das pyrotechnische Mittel bereitstellen muss, können auch isolierungsfreie Metallkabel als elektrisch leitfähiger Verbindungsabschnitt eingesetzt werden. Die Auswahl des elektrisch leitfähigen Verbindungsabschnitts hängt auch davon ab, wie im Zusammenspiel mit dem aktivierten pyrotechnischen Mittel die Umsetzung des Materials erreichbar ist, um die elektrische Unterbrechung innerhalb des Gehäuses zu schaffen.

Das pyrotechnische Mittel ist insbesondere derart dem elektrisch leitfähigen Verbindungsabschnitt zugeordnet, dass bei Umsetzen des pyrotechnischen Mittels die pyrotechnische Wirkung auf den elektrisch leitfähigen Verbindungsabschnitt gerichtet ist. In einer Ausführungsform der vorliegenden Erfindung ist der elektrisch leitfähige Verbindungsabschnitt insbesondere in einem Freiraum des Gehäuses angeordnet, insbesondere in einem Expansionsraum, in den die pyrotechnische Wirkung des pyrotechnischen Mittels bei Umsetzung gerichtet ist. Alternativ oder zusätzlich ist das pyrotechnische Mittel, vorzugsweise in einer Sandwich-Anordnung, insbesondere zwischen einer Wärmequelle oder einer Steuerung zur Entfaltung der pyrotechnischen Wirkung und dem elektrisch leitfähigen Verbindungsabschnitt und/oder einem Freiraum des Gehäuses, insbesondere dem Expansionsraum, angeordnet. Vorzugsweise ist die pyrotechnische Wirkung im Wesentlich in eine Richtung gerichtet. Dies kann beispielsweise dadurch erreicht werden, dass der Freiraum, in den das pyrotechnische Mittel bei Umsetzung expandiert, sich ausgehend von einer Grenzfläche zwischen pyrotechnischem Mittel und Freiraum im Wesentlichen in eine Richtung, beispielsweise vertikal nach oben, erstreckt. Beispielsweise kann das pyrotechnische Mittel wenigstens 50%, 60%, 70%, 80%, 90%, 95% oder 100% der Gesamtfläche einer Innenwand des Gehäuses, wie des Bodens des Gehäuses und/oder einer Seite, die an einer Wärmequelle zum Entfalten der pyrotechnischen Wirkung angebracht ist, belegen, um eine gerichtete Entfaltung der pyrotechnischen Wirkung zu erzielen.

Die erforderlichen Außenmaße der Trennungseinrichtung ergeben sich insbesondere aus den Ansprüchen an den elektrischen leitfähigen Teilabschnitten, wie der Leitfähigkeit des Teilabschnitts, in der Trennungseinrichtung und an die Anforderungen an Gas- und Druckdichte der Trennungseinrichtung. Insbesondere durch gerichtete pyrotechnische Wirkung und/oder Wahl des pyrotechnischen Mittels, insbesondere in Abhängigkeit des elektrisch leitfähigen Teilabschnitts, lassen sich kleine Ausmaße der Trennungseinrichtung realisieren. Insbesondere für den Einsatz in elektrischen Kleingeräten, wie Handys, Kopfhörern, Laptops etc. kann die Trenneinrichtung in Miniaturform ausgeführt werden.

Es zeigte sich, dass es mit der erfindungsgemäßen pyrotechnischen Trennungseinrichtung möglich ist, eine sofortige elektrische Trennung bei Erreichen ungewollter kritischer Ladevorgänge mit höchster Wahrscheinlichkeit sicherzustellen, unabhängig von dem technischen Einsatzgebiet und/oder dem Gerätetyp. Es können Sicherheitslücken auf einfache Weise geschlossen werden, weil eine kompromisslose Evakuierung der Energiezelle von dem Ladegerät nun bei Erreichen des kritischen Betriebszustandes verwirklicht wird. Eine Beschädigung anderer Bauteile insbesondere der Energiezelle oder der Energiezelle benachbarter Bauelemente oder dem Ladegerät können mit der erfindungsgemäßen pyrotechnischen Trennungseinrichtung vermieden werden. Lediglich eine elektrische Verbindungslücke wird durch die pyrotechnische Trennungseinrichtung geschlagen, welche unter Umständen leicht wieder entweder durch eine intakte pyrotechnische Trennungseinrichtung befüllt werden kann oder durch andere Leitungsabschnitte, welche die umgesetzte pyrotechnische Trennungseinrichtung ersetzt.

Die pyrotechnische Trennungseinrichtung ist insbesondere derart ausgestaltet, dass sie austauschbar, insbesondere ohne Bauteile außerhalb der pyrotechnischen Trennungseinrichtung, wie Bauteile der elektrischen Energieversorgung oder der elektrischen Energiezelle außerhalb der Trennungseinrichtung, zu beschädigen, an einer Energiezelle oder an einer Energieversorgung oder an einer elektrisch leitfähigen Leitung zwischen Energieversorgung und Energiezelle angebracht und/oder von dieser/n entfernt werden kann. Vorzugsweise ist die Trennungseinrichtung derart hitze- und/oder druckstabil ausgebildet, dass auch nach Umsetzung des pyrotechnischen Mittels die Trennungseinrichtung ausgetauscht werden kann. Um die Austauschbarkeit der Trennungseinrichtung zu gewährleisten kann es erforderlich sein die Beschädigung von Bauteilen außerhalb der Trennungseinrichtung zu verhindern und/oder insbesondere eine Verformung der Außenkontur der Trennungseinrichtung bei Umsetzung des pyrotechnischen Mittels zu beschränken oder zu vermeiden. Eine zu große Verformung der Außenkontur der Trennungseinrichtung könnte beispielsweise zu einer, insbesondere formschlussartigen, Verbindung zwischen Trennungseinrichtung und Bauteil/en au-ßerhalb der Trennungseinrichtung führen, welche insbesondere die Austauschbarkeit der Trennungseinrichtung einschränken würde.

Bei einer bevorzugten Ausführung der Erfindung umfasst das Gehäuse der pyrotechnischen Trennungseinrichtung wenigstens einen elektrischen energiezellenseitigen und einen ladegerätseitigen Anschluss. Über den jeweiligen externen Anschluss ist der innere elektrisch leitfähige Verbindungsabschnitt einerseits mit der Energiezelle und andererseits mit dem Ladegerät verbindbar und/oder verbunden. Vorzugsweise ist der jeweilige Anschluss als Stecker, an denen der Verbindungsabschnitt angeschlossen ist und insbesondere eine elektrische Leitung anschließbar ist, und/oder als Durchgang in einer Wand des Gehäuses der pyrotechnischen Trennungseinrichtung ausgebildet, durch den hindurch sich eine insbesondere einstückige Verlängerung des elektrisch leitfähigen Verbindungsabschnitts erstrecken kann. Insbesondere bei der Ausführung des Anschlusses als Stecker, insbesondere genormter Stecker, kann eine hermetische Abdichtung des Gehäuses der pyrotechnischen Einrichtung erreicht werden. Beim Durchgang in der Wand zur Durchführung einer Verlängerung, wie einer Kabelverlängerung, soll eine Druckdichtigkeit innerhalb des Gehäuses auch realisiert werden, indem die Durchgänge gasdicht abgedichtet sind. Bei einer bevorzugten Ausführung der Erfindung ist das Gehäuse hermetisch abgedichtet, indem es insbesondere aus einem Stück gespritzt ist und dabei die beiden Anschlüsse an der Gehäusewand, der elektrisch leitfähige Verbindungsabschnitt und das pyrotechnische Mittel umspritzt wird. Selbstverständlich kann das Gehäuse auch zweiteilig insbesondere mit einer Behälter-Deckelstruktur gebildet sein, wobei der Deckel mit dem Behälter hermetisch abdichtend geschlossen werden kann, beispielsweise mittels Verschraubung, Klebung oder einer Kombination aus mechanischen und klebenden Befestigungsmitteln. Auch eine Verschweißung von Gehäuseteilen zur Bildung einer einteiligen Gehäusestruktur kann vorgesehen sein, um ein hermetisch abgedichtetes Gehäuse zu erhalten. Das Gehäuse soll das Eindringen von Feuchtigkeit verhindern. Außerdem soll das Gehäuse derart ausgestaltet sein, dass nach der Umsetzung das Verbrennungsgas nicht entweichen kann und somit umliegende Bauteile nicht beschädigt werden. Zudem sind die Verbrennungsgase meist umwelt- und gesundheitsschädlich und sehr heiß. Insofern ist es von Vorteil, wenn das Gehäuse druckfest und gasdicht ausgebildet ist. Eine Gas- und Druckdichtigkeit von mindestens 20 bar ist von Vorteil. Insbesondere ist das Gehäuse der pyrotechnischen Trennungseinrichtung derart hermetisch dicht auszuführen, dass ein Innendruck von wenigstens 2 bar, 5 bar, 10 bar, 20 bar, 50 bar oder 100 bar ausgehalten werden kann. Die Dichtigkeitsausführung hängt auch davon ab, wie stark im Querschnitt der zu unterbrechende elektrisch leitfähige Verbindungsabschnitt ist und/oder wie groß das Innenvolumen des Gehäuses ist.

Vorzugsweise ist das Gehäuse aus einem starren Material, wie Kunststoff, insbesondere faserverstärkter Kunststoff, oder Metall realisiert, um ausreichend starr und fest zu sein, damit beim Umsetzen des pyrotechnischen Mittels die Gehäusestruktur im Wesentlichen intakt bleibt und nur der elektrisch leitfähige Verbindungsabschnitt insbesondere vollständig mitumgesetzt wird.

Bei einer bevorzugten Ausführung der pyrotechnischen Trennungseinrichtung umfasst das pyrotechnische Mittel ein thermisches Frühzündmittel, das bei Überschreitung einer materialspezifisch festgesetzten Betriebstemperatur, beispielsweise von etwa 80°C, 100°C, 125°C, 150°C, 160°C, 170°C, 180°C, 190°C oder 200°C (± 5°C), der das pyrotechnische Mittel ausgesetzt ist, umsetzt. Insbesondere kann die Betriebstemperatur, bei dessen Überschreitung das thermische Frühzündmittel umsetzt, mit einer Toleranz von ± 5°C, bevorzugt mit einer Toleranz von ± 2,5°C, besonders bevorzugt mit einer Toleranz von ± 1,5°C, festgesetzt werden. Das vorbestimmte Entfalten der pyrotechnischen Wirkung kann beispielsweise dadurch initiiert werden, dass das thermische Frühzündmittel benachbart einer zu überwachenden Wärmequelle angeordnet ist, welche insbesondere ein Charakteristikum für den kritischen Betriebszustand darstellt. Beispielsweise ist die Wärmeentwicklung der Energiezelle ein starkes Indiz, ob die Ladefunktion in korrekter Weise ausgeführt wird. Bei einer Energiezelle, die einen Defekt aufweist, kann es schnell zu untypisch hohen Temperaturen führen, welche eine unkontrollierbare Kettenreaktion innerhalb der Energiezelle auslösen können. Um dies zu vermeiden, kann das thermische Frühzündmittel derart eingestellt sein, dass schon bei niedrigeren Temperaturen, welche noch keine Kettenreaktion auslösen, bereits das pyrotechnische Mittel umgesetzt wird. Auf diese Weise übernimmt das pyrotechnische Mittel selbst die Überwachungsfunktion hinsichtlich eines vorbestimmten kritischen Betriebszustands. Das thermische Frühzündmittel kann insbesondere auch benachbart einer Wärmequelle der elektrischen Energieversorgung, beispielsweise benachbart einem Spannungsregler eines Ladegeräts, angeordnet sein. Es können neben der Temperaturabhängigkeit auch andere Betriebsparameter, wie Lichtstärke oder Druck, eingesetzt werden, um ein Selbstauslösen des pyrotechnischen Mittels ab einer Auslöseschwelle zu erreichen.

Vorzugsweise hat das Gehäuse der pyrotechnischen Trennungseinrichtung einen Wandabschnitt, vorzugsweise einen Boden, an dem gehäuseinnenseitig das pyrotechnische Mittel, wie das Frühzündmittel, den Wandabschnitt berührend angeordnet ist und der dazu ausgelegt ist, die pyrotechnische Trennungseinrichtung an ein zu überwachendes Gerät zu befestigen. Des Weiteren kann auch der Wandabschnitt außenseitig im Bereich der Wärmequelle angebracht sein und/oder an der Außenseite des Zellengehäuses der Energiezelle. Vorzugsweise ist die Wandabschnittstärke größer als 1 mm oder 2 mm ausgebildet und/oder aus einem wärmeübertragbaren Material gebildet, dass die sich außerhalb des Gehäuses entwickelnde Wärme leicht hin zum pyrotechnischen Mittel übertragen werden kann.

Bei einer Weiterbildung der Erfindung hat das Gehäuse ein Gesamtinnenvolumen, das von der Gehäusewandung eingeschlossen ist. Von dem Gesamtinnenvolumen nimmt das pyrotechnische Mittel mehr als 20 % oder 30 % und nicht mehr als 60 % oder 50 % ein. Vorzugsweise ist das Volumen des pyrotechnischen Mittels deutlich geringer als 50 % des Gesamtinnenvolumens aber größer als 10 % oder 20 % des Gesamtinnenvolumens. Der von dem pyrotechnischen Mittel freie Volumenbereich kann vorzugsweise mit Gas, wie Luft, gefüllt sein. Durch das Volumenverhältnis zwischen der Belegung des pyrotechnischen Mittels und dem freien Gasraum in dem Gehäuse kann die Umsetzung des pyrotechnischen Mittels eingestellt werden.

Bei einer bevorzugten Ausführung der Erfindung umfasst die pyrotechnische Trennungseinrichtung zusätzlich eine Steuerung, insbesondere eine elektrische Steuerung, zum Auslösen, insbesondere Zünden oder Anzünden, der pyrotechnischen Wirkung des pyrotechnischen Mittels. Vorzugsweise ist die Steuerung in dem Gehäuse der pyrotechnischen Trennungseinrichtung angeordnet. Mit der zusätzlichen Steuerung kann das Umsetzen des pyrotechnischen Mittels innerhalb des Gehäuses auch unabhängig von den Umsetzbedingungen des pyrotechnischen Mittels erreicht werden. Auf diese Weise ist ein präziseres und zuverlässigeres Auslösen der Umsetzung des pyrotechnischen Mittels erreichbar. Teile der Steuerung können in Kontakt mit dem pyrotechnischen Mittel stehen und sind insbesondere in dem pyrotechnischen Mittel eingebettet. Vorzugsweise ist die Steuerung durch ein Heizelement, wie einen elektrischen Heizwiderstand, gebildet. Wird die Steuerung beispielsweise durch einen Computer oder eine Bedienperson betätigt, indem ein elektrisches Steuersignal dem Heizelement zugeführt wird, wird das Heizelement aktiviert und erzeugt Wärme, welche beispielsweise beim Einsatz von dem thermischen Frühzündmittel das Auslösen der pyrotechnischen Umsetzung bewirkt. Insbesondere kann die Steuerung zur Zustandsüberwachung eingesetzt werden und/oder Teil einer Zustandsüberwachung sein. Mit einer Zustandsüberwachung kann geprüft werden, ob das pyrotechnische Mittel umgesetzt hat. Beispielsweise kann die Steuerung, vorzugsweise ein Heizelement, die Steuerleitung und/oder das pyrotechnisches Mittel derart ausgestaltet sein, dass die pyrotechnische Wirkung des pyrotechnischen Mittels die Steuerung und/oder die Steuerleitung zerstört, beschädigt, oder die Verbindung zwischen der Steuerung und der Steuerleitung einschränkt, vorzugsweiser aufhebt. Insbesondere kann dafür das pyrotechnische Mittel entsprechend der Hitzebeständigkeit der Steuerung und/oder der Steuerleitung angepasst werden oder umgekehrt. Die Zustandsüberwachung kann, vorzugsweise bei einer Steuerung in Form eines elektrischen Heizwiderstandes, insbesondere durch einen Kontrollstrom und/oder eine Kontrollspannung erfolgen. Insbesondere kann durch Umsetzen das pyrotechnischen Mittels der Kontrollstrom unterbrochen werden, beispielsweise wenn die Verbindung zwischen Steuerleitung und Steuerung unterbrochen wird, oder ein Widerstandsanstieg, beispielsweise am Heizelement, gemessen werden. Auch andere Steuerungen können eingesetzt werden, beispielsweise kann eine pyrotechnische Steuerung verwendet werden, die beispielsweise eine Sprengkapsel aufweist, welche dazu ausreicht, eine vollständige Umsetzung des pyrotechnischen Mittels innerhalb des Gehäuses zu veranlassen. Die Spreng- oder Zündkapsel ist vorzugsweise benachbart dem pyrotechnischen Mittel innerhalb des Gehäuses angeordnet und kann über eine nach außen führende Zündlitze betätigt werden. Andere Steuerungsrichtungen sind einsetzbar, die dazu ausreichen, eine ausreichende Aktivierungsenergie dem pyrotechnischen Mittel zuzuführen, um die Umsetzung des pyrotechnischen Mittels innerhalb des Gehäuses zu veranlassen.

Durch die Verwendung einer Steuerung, die von Außerhalb der Trenneinrichtung betätigt werden kann, ist die Trenneinrichtung für eine ferngesteuerte Umsetzung, insbesondere für eine ferngesteuerte Notabschaltung, geeignet. Die Betätigung kann insbesondere kabellos, beispielsweise über eine Funkverbindung, oder über ein aus der Trenneinrichtung herausführendes Kabel erfolgen.

Bei einer Weiterbildung der Erfindung hat die Steuerung eine Steuerleitung, welche sich durch einen Steueranschluss am Gehäuse in das Gehäuse erstrecken kann und mit der Steuerung gekoppelt ist. Der Steueranschluss kann als Stecker, über den insbesondere eine elektrische Leitung anschließbar ist, oder als Durchgang in eine Wand des Gehäuses ausgebildet sein, durch den hindurch sich die Steuerleitung erstreckt.

Vorzugsweise kann die Steuerleitung mit einem Steuergerät verbunden sein, das Teil eines noch später zu erläuternden Mobilgeräts sein kann, das ein Aktivierungssignal der Steuerung zum Umsetzen des pyrotechnischen Mittels zuführen kann.

Zu einem bevorzugten pyrotechnischen Mittel können folgende Stoffe, Substanzen und Gemische eingesetzt werden, wobei klar ist, dass die erwähnten Einzelstoffe auch in Kombination zueinander oder einzeln verwendet werden können.

Dabei werden erfindungsgemäß Azotetrazolate als Komponente eingesetzt. Insbesondere werden dabei als Azotetrazolatkomponente Aminoguandin-5,5'-azotetrazolat (C₄H₁₄N₁₈), kurz AGATZ, und Guanidin-5,5'-azotetrazolat (C₄,H₁₂N₁₆), kurz GATZ, eingesetzt.

Die Azotetrazolatkomponenten können entweder alleine oder in Mischungen untereinander und/oder mit weiteren Komponenten verwendet werden. Die Strukturformeln von AGATZ und GATZ sind wie folgt:

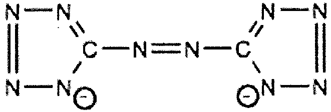

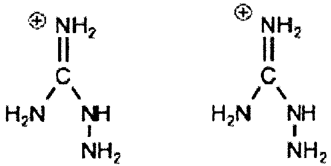

Aminoguandin-5,5'-azotetrazolat (C₄H₁₄N₁₈, AGATZ).

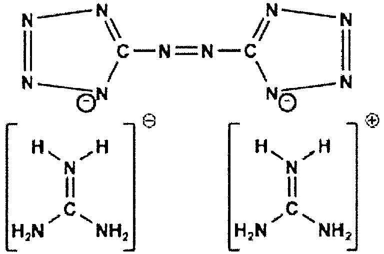

Guanidin-5,5'-azotetrazolat (C₄,H₁₂N₁₆, GATZ).

Der Auslöse- oder Verpuffungspunkt des reinen AGATZ beträgt 209°C, der des GATZ beträgt 240°C.

Durch Mischungen von AGATZ und/oder GATZ und/oder ausgewählten Komponenten lassen sich die Verpuffungstemperaturen im Bereich von 165°C bis 195°C steuern, und die Verpuffungstemperaturen der Mischungen können tiefer liegen als die der Einzelkomponenten.

Für Frühzündmittel sind Verpuffungstemperaturen unter 200°C besonders interessant. Die erfindungsgemäßen pyrotechnischen Mittel erfüllen diese Forderung bei ausgezeichneter Langzeitstabilität.

Als Zusatzstoffe für das pyrotechnische Mittel können verwendet werden:

### 1. Oxidationsmittel (einzeln oder in Mischungen)

Nitrate der Alkali- und/oder Erdalkalimetalle und/oder des Ammoniums, wie Natrium-, Kalium- oder Ammoniumnitrat, Perchlorate der Alkali- und/oder Erdalkalimetalle und/oder des Ammoniums, Peroxide der Alkali- und/oder Erdalkalimetalle oder des Zinks.

### 2. Stickstoffhaltige Verbindungen (einzeln oder in Mischungen)

Ammoniumpikrat, Aminoguanidiniumpikrat, Guanidiniumpikrat, Aminoguanidiniumstyphnat, Guanidiniumstyphnat, Nitroguanidin, Nitroaminoguanidin, Nitrotriazolon, Derivate des Tetrazols wie 5-Aminotetrazol, Ditetrazolylamin, Ditetrazol und/oder dessen Salze, Nitraminotetrazol und/oder dessen Salze, wie Ammonium-Nitraminotetrazolat und Aminoguanidinium-Nitraminotetrazolat, Aminoguanidinnitrat, Diaminoguanidinnitrat, Triaminoguanidinnitrat, Guanidinnitrat, Dicyandiamidinnitrat, Diaminoguanidin-Azotetrazolat, Triaminoguanidin-Azotetrazolat und/oder Ammonium-Azotetrazolat.

### 3. Energiereiche Zuschläge (einzeln oder in Mischungen)

Hexogen, Oktogen, Nitrocellulose.

### 4. Reduktionsmittel (einzeln oder in Mischungen)

Aluminium, Titan, Titanhydrid, Bor, Borhydrid, Zirkon, Zirkonhydrid, Silicium, Graphit, Aktivkohle, Ruß.

### 5. Bindemittel (einzeln oder in Mischungen)

Cellulose sowie deren Derivate, Polyvinylbutyrale, Polynitropolyphenylen, Polynitrophenylether, Plexigum, Polyvinylacetat, Copolymere.

### 6. Abbrandmoderatoren, Stabilisatoren und Verarbeitungshilfen (einzeln oder in Mischungen)

Ferrocen und Derivate, Acetonylacetate, Salicylate, Bariumcarbonat, Strontiumcarbonat, Magnesiumcarbonat, Melamin, Zinkoxid, Zinkcarbonat, Silikate, Kieselgele, Kieselsäuren, beispielsweise Aerosil (Fa. Degussa), Bornitrid.

Dabei wird Dinitrobenzofuroxan (DNBF) als Komponente eingesetzt. Das Dinitrobenzofuroxan kann in Mischungen mit weiteren Komponenten verwendet werden. Der Schmelzpunkt bzw. Zersetzungspunkt von reinen Dinitrobenzofuroxan (DNBF) beträgt ca. 170°C.

Bei Mischungen von DNBF mit ausgewählten Komponenten lassen sich die Verpuffungstemperaturen im Bereich von 150°C bis 160°C steuern, und die Verpuffungstemperaturen der Mischungen können tiefer liegen als die der Einzelkomponenten.

Als Zusatzstoffe können die oben genannten verwendet werden.

Des Weiteren kann das pyrotechnische Mittel gebildet werden durch den Einsatz von 2- [Bis-(2,4,6-trinitrophenyl)]aminoethylnitrat, kurz als Dipikrylaminoethylnitrat (DPN) bezeichnet. Diese Substanz kann entweder alleine oder in Mischungen mit weiteren Komponenten verwendet werden. DPN kann aus 2, 4-Dinitrochlorbenzol und Ethanolamin mit anschließender Nitrierung hergestellt werden (Lit. : R. V. Clark, Ind. Eng. Chem., 25, 1385 (1933)). Die Strukturformel ist wie folgt:

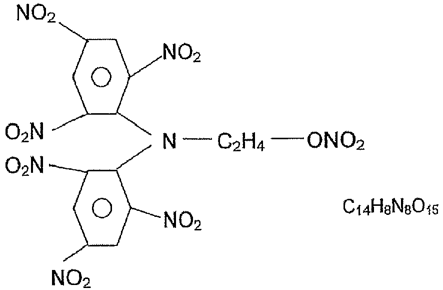

Der Verpuffungspunkt von reinem DPN liegt bei ca. 200°C. Bei Mischungen von DPN mit ausgewählten Komponenten als Zusatzstoffe lässt sich der Verpuffungspunkt im Bereich von 178°C bis 208°C steuern, und die Verpuffungstemperaturen der Mischungen können tiefer liegen als die der Einzelkomponenten.

Als Zusatzstoffe können verwendet werden:

### 1. Stickstoffhaltige Verbindungen (einzeln oder in Mischungen)

Nitroguanidin, Nitroaminoguanidin, Nitrotriazolon, Derivate des Tetrazol wie 5-Aminotetrazol, Ditetrazolylamin, Ditetrazol und/oder deren Salze, Nitraminotetrazol und/oder seine Salze, wie Ammonium-Nitraminotetrazol und/oder Aminoguanidinium-Nitraminotetrazol, Aminoguanidinnitrat, Diaminoguanidinnitrat, Triaminoguanidinnitrat, Guanidinnitrat, Dicyandiamidinnitrat, Diaminoguanidin-Azotetrazolat.

### 2. Oxidationsmittel (einzeln oder in Mischungen)

Nitrate der Alkali- oder Erdalkalimetalle oder des Ammoniums wie Natriumnitrat oder Kaliumnitrat, Perchlorate der Alkali-oder Erdalkalimetalle oder des Ammoniums, Peroxide der Erdalkalimetalle oder des Zinks.

### 3. Reduktionsmittel (einzeln oder in Mischungen)

Aluminium, Titan, Titanhydrid, Bor, Borhydrid, Zirkon, Zirkonhydrid, Silicium, Graphit, Aktivkohle, Russ.

### 4. Bindemittel (einzeln oder in Mischungen)

Cellulose sowie deren Derivate, Polyvinylbutyrale, Polynitropolyphenylen, Polynitrophenylether, Plexigum, Polyvinylacetat und Copolymere.

### 5. Energiereiche Zuschläge (einzeln oder in Mischungen)

Hexogen, Oktogen und Nitrocellulose.

### 6. Abbrandmoderatoren und Verarbeitungshilfen (einzeln oder in Mischungen)

Ferrocen und Derivate, Acetonylacetate, Salicylate, Silikate, Kieselgele, Bornitrid.

Des Weiteren können Primärexplosivstoffe einzeln, in Kombination mit den obengenannten Stoffen oder als Mischung untereinander zur Erreichung einer höheren Wirksamkeit eingesetzt werden. Als Beispiele seien genannt Diazodinitrophenol, Salze der Styphinsäure, Tetrazen, Salze des Dinitrobenzofuroxans.

Des Weiteren betrifft die Erfindung ein System zum elektrischen Laden einer elektrischen Energiezelle, die insbesondere einen elektrischen Energiespeicher und einen Energiewandler aufweisen kann. Das System umfasst eine erfindungsgemäße pyrotechnische Trennungseinrichtung, eine elektrische Energiezelle und/oder ein elektrisches Ladegerät. Die Energiezelle kann durch das Ladegerät über eine elektrische Verbindung/Leitung geladen werden, wobei die pyrotechnische Trennungseinrichtung in der elektrischen Verbindung/Leitung eingebunden ist, so dass beim Auslösen der pyrotechnischen Trennungseinrichtung die elektrische Verbindung/Leitung zwischen der Energiezelle und dem Ladegerät unterbrochen ist. Dabei kann die pyrotechnische Trennungseinrichtung mit dem eigenen Gehäuse außerhalb der Gerätegehäuse des Ladegeräts und der Energiezelle liegen, insbesondere außerhalb des Gehäuses des Mobilgeräts. Bei einer bevorzugten Ausführung der Erfindung ist die pyrotechnische Trennungseinrichtung gemäß der Erfindung im Bereich des Steckeranschlusses der elektrischen Verbindungsleitung zwischen der Energiezelle und dem Ladegerät angeordnet. Dieser Bereich ist von Vorteil, als er per se eine starrere Struktur aufweist, als das flexible Verbindungskabel zwischen den Anschlusssteckern. Es sei klar, dass erfindungsgemäß die pyrotechnische Trennungseinheit auch innerhalb des Ladegeräts oder des Mobilgeräts angeordnet sein kann, um einen frischen Verbindungsabschnitt in das Gehäuse der pyrotechnischen Trennungseinrichtung erstrecken zu lassen.

Des Weiteren betrifft die Erfindung ein Mobilgerät, wie ein Mobilfunktelefon, ein Laptop, eine E-Zigarette, ein Smartphone, eine Taschenlampe, einen Kopfhörer oder dergleichen. Das Mobilgerät umfasst eine elektrisch aufladbare Energiezelle, wie eine Batterie oder einen Akkumulator. Des Weiteren hat das Mobilgerät ein Gerätegehäuse, in dem die Energiezelle vollständig untergebracht ist. Das Gerätegehäuse dient als Schutz vor Schlägen und Feuchtigkeitseintritt. In dem Gerätegehäuse ist die Energiezelle vollständig untergebracht. Des Weiteren hat das Gerätegehäuse wenigstens einen Ladeanschluss, an dem das externe elektrische Ladegerät anschließbar ist. In dem Gerätegehäuse des Mobilgeräts und vorzugsweise benachbart der Energiezelle des Mobilgeräts ist eine pyrotechnische Trennungseinrichtung derart angeordnet, dass dessen pyrotechnische Wirkung bei Erreichen des vorbestimmten Betriebszustands eine elektrische Verbindung zwischen dem Ladeanschluss und der Energiezelle unterbricht. Es sei klar, dass die pyrotechnische Trennungseinrichtung gemäß der oben beschriebenen erfindungsgemäßen Trennungseinrichtung ausgeführt sein kann. Die pyrotechnische Trennungseinrichtung liegt außerhalb des Gehäuses der Energiezelle, aber wie bereits angegeben, innerhalb des Gerätegehäuses und unterbricht die elektrische Verbindung zwischen Anschluss und Energiezelle. Sowohl das Gehäuse der pyrotechnischen Trennungseinrichtung als auch das Mobilgerätgehäuse dienen als Schutz für die Bedienperson, wenn es zur Umsetzung des pyrotechnischen Mittels innerhalb der pyrotechnischen Trennungseinrichtung kommt.

Des Weiteren betrifft die Erfindung ein Ladegerät zum Aufladen einer elektrisch aufladbaren Energiezelle, wie einer Batterie oder eines Akkumulators, insbesondere eines erfindungsgemäßen, oben beschriebenen Mobilgeräts. Das Ladegerät umfasst ein Gerätegehäuse, das einen Ladeanschluss aufweist, an dem die Energiezelle anschließbar ist. In dem Gerätegehäuse des Ladegeräts ist eine pyrotechnische Trennungseinrichtung derart angeordnet, dass dessen pyrotechnische Wirkung bei Erreichen eines vorbestimmten Betriebszustands eine elektrische Verbindung in dem Gerätegehäuse zwischen Anschluss und der Energiezelle unterbricht. Es sei klar, dass auch bei kontaktloser Energieladung, beispielsweise durch elektromagnetische, induktive Ladevorgänge ein kritischer Betriebszustand dann ausgeschlossen werden kann, wenn die pyrotechnische Trennungseinrichtung im Bereich der Ladestation eine Energiezuführung zu der Induktivität unterbricht, oder die pyrotechnische Trennungseinrichtung im Bereich des Mobilgeräts angeordnet ist, so dass der Strahlungsempfänger, der die Strahlung in elektrische Energie umwandelt, von der aufzuladenden Energiezelle getrennt ist.

Außerdem betrifft die vorliegende Erfindung eine pyrotechnische Trennungseinrichtung zum Beeinträchtigen, vorzugsweise Unterbrechen, einer elektrischen Kopplung an eine elektrische Energieversorgung, wie ein Ladegerät, ein elektrochemischer Energiespeicher und/oder ein Energiewandler. Die pyrotechnische Trennungseinrichtung umfasst einen elektrisch leitfähigen Verbindungsabschnitt, wie ein elektrisch leitfähiges Kabel, eine elektrisch leitfähige Bahn oder dergleichen, über den elektrische Energie von der Energieversorgung leitbar ist. Insbesondere ist über den Verbindungsabschnitt elektrische Energie von der elektrischen Energieversorgung ableitbar oder der elektrischen Energieversorgung zuleitbar. Ferner umfasst die pyrotechnische Trennungseinrichtung ein Gehäuse, in dem der Verbindungsabschnitt angeordnet ist, und ein in dem Gehäuse untergebrachtes pyrotechnisches Mittel, das dazu ausgelegt ist und/oder derart ansteuerbar ist, dass es seine pyrotechnische Wirkung bei Erreichen eines vorbestimmten Betriebszustands entfaltet. Das pyrotechnische Mittel kann außerdem derart dem Verbindungsabschnitt zugeordnet sein, dass die pyrotechnische Wirkung des pyrotechnischen Mittels die elektrische Leitfähigkeit des Verbindungsabschnitts innerhalb des Gehäuses zumindest einschränkt, vorzugsweise aufhebt.

Beispielsweise kann die elektrische Energieversorgung eine elektrische Energiezelle sein. Bei der Energiezelle kann es sich beispielsweise um eine Lithium-Batterie handeln. Insbesondere sollen sog. Sekundär-Batterien vorgesehen sein, welche auch als Akkumulatoren bezeichnet werden, die nach Entladung wieder aufladbar sind. Beispielsweise finden Lithium-Ionen-Akkumulatoren Anwendung. Vorzugsweise kommen als Akkumulator- bzw. Batterietypen die sog. Gerätebatterien zum Einsatz, welche beispielsweise in Armbanduhren, Smartphones, Laptops oder Taschenlampen, primär Anwendung finden.

Insbesondere für den Einsatz in elektrischen Kleingeräten, wie Smartphones, Kopfhörern, Laptops oder dergleichen, kann die Trennungseinrichtung in Miniaturform ausgeführt werden. Insbesondere soll das das pyrotechnische Material aufnehmende Gehäuse sowie die zum Unterbrechen bzw. Beeinträchtigen der elektrischen Kopplung notwendige Menge des pyrotechnischen Materials insbesondere derart klein bemessen sein, dass die pyrotechnische Einrichtung samt Gehäuse platzsparend in den Gehäusen elektronischer Kleingeräte aufnehmbar ist, vorzugsweise derart, dass die Gesamtabmessung der elektronischen Kleingeräte durch das Vorhandensein der pyrotechnischen Trennungseinrichtung sich nicht vergrößert. Ein beispielhafter Lithium-Ionen-Akkumulator, welcher in einem Smartphone eingesetzt wird, kann beispielsweise eine Gesamtabmessung von etwa 4 cm x 3 cm x 0,5 cm (Länge x Breite x Höhe) aufweisen. In diesem Fall kann das Gehäuse der pyrotechnischen Trenneinrichtung beispielsweise 0,5 x 0,5 x 0,5 cm groß bemessen sein, oder eine adäquate zylindrische Abmessung besitzen. Insbesondere ist die Trennungseinrichtung bzw. das Gehäuse derart miniaturisiert und die notwendige pyrotechnische Materialmenge derart klein, dass eine Unterbringung in elektronischen Kleingeräten möglich ist. Es sei klar, dass der Füllstand des pyrotechnischen Materials innerhalb des Gehäuses nicht vollständig das Gehäuse ausfüllen muss. Insbesondere kann zur pyrotechnischen Umsetzung des pyrotechnischen Materials ein gewisser Anteil an Sauerstoff-Volumen innerhalb des Gehäuses, in dem also kein pyrotechnisches Material vorhanden ist, vorliegen.

Als Materialien für das Gehäuse der pyrotechnischen Trennungseinrichtung kommen Materialien in Frage, welche zum Einen den Anforderungen an ein druckdicht geschlossenes oder verschließbares, insbesondere fluid-, flüssigkeits- und/oder gasdicht verschließbares, Gehäuse gerecht werden und zum Anderen den von der kritischen Wärmequelle hin zu dem pyrotechnischen Material zu gewährleistenden Wärmeeintrag ermöglichen können. Beispielsweise kann Metall, wie Stahl, Messing, Aluminium, Kunststoff oder Glasfaser-Materialien verwendet werden. Die Wandstärke und die Materialwahl sind dabei derart aufeinander abzu-stimmen, dass den Dichtigkeitsanforderungen des Gehäuses sowie die Wärmeeintragsmöglichkeit ermöglicht ist. Es wurde herausgefunden, dass zum Einen die Positionierung des das temperatursensibel auslösende pyrotechnische Material enthaltenden Gehäuses sowie die Wärmeleitgradienten der das pyrotechnische Material umgebenden Komponenten relevant ist, um das Umsetzen bzw. Zünden des pyrotechnischen Materials zu einem gewünschten Zeitpunkt zu realisieren, insbesondere eine verzögerte Zündung oder eine frühzeitige Zündung zu vermeiden.

In einer beispielhaften Ausführung der erfindungsgemäßen pyrotechnischen Trennungseinrichtung weist das Gehäuse wenigstens zwei Anschlüsse, insbesondere Steckanschlüsse, auf, über die der Verbindungsabschnitt jeweils mit einem elektrischen Bauteil, wie einem elektrischen Verbraucher, verbindbar und/oder verbunden ist. Vorzugsweise ist der jeweilige Anschluss als Stecker, der mit dem Verbindungsabschnitt verbunden ist und/oder über den insbesondere eine externe elektrische Leitung anschließbar oder angeschlossen ist, oder als Durchgang in einer Wand des Gehäuses ausgebildet, durch den hindurch sich eine insbesondere einstückige Verlängerung des elektrisch leitfähigen Verbindungsabschnitts erstreckt.

Gemäß einer Weiterbildung der vorliegenden Erfindung umfasst das pyrotechnische Mittel ein thermisches Frühzündmittel, das bei Überschreitung einer Betriebstemperatur, beispielsweise von 100 °C, 125 °C, 150 °C, 160 °C, 170 °C, 180 °C, 190 °C oder 200 °C, der das pyrotechnische Mittel ausgesetzt ist, umsetzt. Das vorbestimmte Entfalten der pyrotechnischen Wirkung kann beispielsweise dadurch erreicht sein, dass das pyrotechnische Mittel benachbart einer Wärmequelle angeordnet ist, welche ein Charakteristikum für einen kritischen Betriebszustand ist, wobei insbesondere das Gehäuse einen Wandabschnitt, vorzugsweise einen Boden, aufweist, an dem gehäuseinnenseitig das pyrotechnische Mittel berührend angeordnet ist und/oder außenseitig im Bereich einer Wärmequelle und/oder an einer Außenseite des Zellengehäuses eines elektrischen Bauteils angebracht ist.

In einer beispielhaften Ausführung der erfindungsgemäßen pyrotechnischen Trennungseinrichtung umfasst das Gehäuse ein Gesamtinnenvolumen, von dem das pyrotechnische Mittel nicht mehr als 60 % einnimmt, vorzugsweise weniger als 50 %, aber mehr als 10 % oder 20 % einnimmt, wobei insbesondere der von dem pyrotechnischen Mittel freie Volumenbereich mit Gas, wie Luft, gefüllt ist.

Gemäß einer Weiterbildung der vorliegenden Erfindung umfasst die pyrotechnische Trennungseinrichtung eine Steuerung zum Auslösen der pyrotechnischen Wirkung des pyrotechnischen Mittels, wobei die Steuerung in dem Gehäuse vorgesehen ist. Die Steuerung kann in Kontakt mit dem pyrotechnischen Mittel stehen. Beispielsweise kann die Steuerung dem pyrotechnischen Mittel eingebettet sein. In einer beispielhaften Weiterbildung ist die Steuerung durch ein Heizelement, wie einen elektrischen Heizwiderstand, gebildet. Dabei kann die Steuerung eine Steuerleitung aufweisen, welche sich durch einen Steueranschluss von außerhalb des Gehäuses in das Gehäuse erstreckt und mit der Steuerung gekoppelt ist. Der Steueranschluss kann beispielsweise als Stecker, an dem die interne Steuerleitung angeschlossen ist und/oder über den insbesondere eine externe elektrische Leitung anschließbar ist, oder als Durchgang in einer Wand des Gehäuses ausgebildet sein, durch den hindurch sich die Steuerleitung erstreckt.

Außerdem betrifft die vorliegende Erfindung ein System zum elektrischen Laden einer elektrischen Energiezelle. Das System umfasst eine pyrotechnische Trennungseinrichtung, welche beispielsweise gemäß der oben beschriebenen, erfindungsgemäßen Aspekte ausgebildet sein kann. Ferner umfasst das System eine elektrische Energieversorgungszelle, die über eine elektrische Verbindung elektrische Energie leiten kann. Beispielsweise kann die elektrische Energieversorgung über die elektrische Verbindung elektrische Energie ableiten oder es kann elektrische Energie über die elektrische Verbindung zugeleitet werden. Die pyrotechnische Trennungseinrichtung ist beispielsweise derart in der elektrischen Verbindung angeordnet, dass beim Auslösen der pyrotechnischen Trennungseinrichtung die elektrische Verbindung zwischen der Energiezelle und dem Ladegerät unterbrochen ist.

Des Weiteren betrifft die vorliegende Erfindung ein Elektrogerät, insbesondere Elektrokleingerät, wie Mobilfunktelefon, Laptop, E-Zigarette, Smartphone, Kopfhörer oder dergleichen, mit einer elektrisch aufladbaren Energiezelle, wie einer Batterie oder einem Akkumulator. Das Elektrogerät umfasst ein Gerätegehäuse, in dem die Energiezelle vollständig untergebracht ist und das einen Anschluss aufweist, an dem ein elektrisches Ladegerät oder ein elektrischer Verbraucher anschließbar oder angeschlossen ist. In dem Gerätegehäuse des Elektrogeräts ist beispielsweise eine pyrotechnische Trennungseinrichtung angeordnet, die beispielsweise gemäß der oben beschriebenen, erfindungsgemäßen Aspekte ausgebildet sein kann. Vorzugsweise ist die pyrotechnische Trennungseinrichtung derart angeordnet, dass dessen pyrotechnische Wirkung bei Erreichen eines vorbestimmten Betriebszustands eine elektrische Verbindung zwischen dem Anschluss und der Energiezelle unterbricht.

Außerdem betrifft die vorliegende Erfindung ein Elektrogerät, insbesondere Elektrokleingerät, wie Mobilfunktelefon, Laptop, E-Zigarette, Smartphone, Kopfhörer oder dergleichen, mit einer elektrisch aufladbaren Energiezelle, wie einer Batterie oder einem Akkumulator. Das Elektrogerät umfasst ein Gerätegehäuse, in dem die Energiezelle vollständig untergebracht ist und das einen Anschluss aufweist, an dem ein elektrisches Bauteil anschließbar oder angeschlossen ist. Vorzugsweise ist die pyrotechnische Trennungseinrichtung derart angeordnet, dass dessen pyrotechnische Wirkung bei Erreichen eines vorbestimmten Betriebszustands eine elektrische Verbindung zwischen dem Anschluss und der Energiezelle unterbricht.

Des Weiteren betrifft die vorliegende Erfindung ein System zum elektrischen Entladen einer elektrischen Energiezelle. Das System umfasst eine pyrotechnische Trennungseinrichtung, die beispielsweise entsprechend der oben beschriebenen erfindungsgemäßen Aspekte ausgebildet sein kann. Ferner weist das System eine elektrische Energiezelle und einen elektrischen Verbraucher auf. Die Energiezelle kann durch den Verbraucher über eine elektrische Verbindung geladen werden. Des Weiteren ist die pyrotechnische Trennungseinrichtung in die elektrische Verbindung integriert. Vorzugsweise ist die Trennungseinrichtungen derart integriert, dass beim Auslösen der pyrotechnischen Trennungseinrichtung die elektrische Verbindung zwischen Energiezelle und Verbraucher beeinträchtigt, vorzugsweise unterbrochen, ist.

Hinsichtlich der für das pyrotechnische Mittel einzusetzenden Stoffe, Substanzen, Zusatzstoffe und Gemische wird auf die Ausführungen in Bezug auf die vorhergehenden erfindungsgemäßen Aspekte verwiesen.

Bevorzugte Ausgestaltungen sind in den Unteransprüchen angegeben.

Weitere Eigenschaften, Vorteile und Merkmale der Erfindung werden durch die folgende Beschreibung bevorzugter Ausführungen der Erfindung anhand der beiliegenden Zeichnungen erläutert, in denen zeigen:
- Fig. 1: eine schematische Darstellung eines erfindungsgemäßen Ladesystems für eine wiederbeladbare elektrische Energiezelle, wie eine Batterie, in einer ersten Ausführung;
- Fig. 2: eine schematische Prinzipskizze eines erfindungsgemäßen Ladesystems für eine elektrische Energiezelle, wie eine wiederbeladbare Batterie, in einer zweiten Ausführung;
- Fig. 3: eine schematische Prinzipskizze eines erfindungsgemäßen Ladesystems für eine elektrische Energiezelle, wie eine wiederbeladbare Batterie, in einer dritten Ausführung;
- Fig. 4: eine schematische Querschnittsansicht einer erfindungsgemäßen pyrotechnischen Trennungseinrichtung in einer ersten Ausführung, wobei die pyrotechnische Trennungseinrichtung in einem unaktivierten Wartezustand ist;
- Fig. 5: eine schematische Querschnittsansicht der pyrotechnischen Trennungseinrichtung nach Fig. 4 nach deren Umsetzung;
- Fig. 6: eine schematische Querschnittsansicht einer erfindungsgemäßen pyrotechnischen Trennungseinrichtung einer erfindungsgemäßen pyrotechnischen Trennungseinrichtung in einer zweiten Ansicht, wobei die pyrotechnische Trennungseinrichtung in einem unaktivierten Wartezustand ist;
- Fig. 7: eine schematische Querschnittsansicht der erfindungsgemäßen pyrotechnischen Trennungseinrichtung gemäß Fig. 6 nach deren Umsetzung.

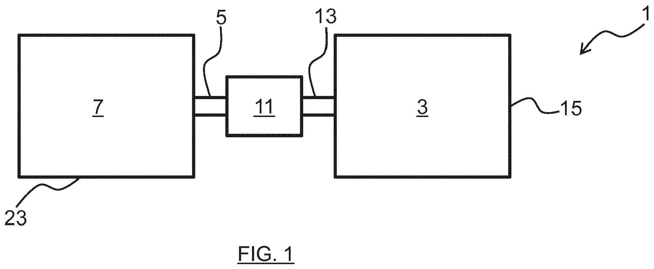

In Fig. 1 ist im Allgemeinen das erfindungsgemäße System zum elektrischen Laden einer elektrischen Energiezelle im Allgemeinen mit der Bezugsziffer 1 versehen. Die elektrische Energiezelle ist in der in Fig. 1 gezeigten Darstellung eine wieder- oder mehrmals aufladbare Batterie 3, welche einen nicht näher dargestellten elektrochemischen Energiespeicher und Energiewandler umfasst. Die wiederbeladbare Batterie 3 ist über eine elektrische Verbindung beispielsweise in Form einer elektrischen Kabel-Leitung (5, diesseitig des Ladegeräts 7; 13 diesseitig der Energiequelle) mit einem Energiezellenladegerät gekoppelt, das in der in Fig. 1 dargestellten Ausführung ein Batterieladegerät 7 ist.

Um einen kritischen Überladezustand der elektrischen Energiezelle zu vermeiden, ist die erfindungsgemäße pyrotechnische Trennungseinrichtung 11 im Bereich der Leitung 5 angeordnet. Bei einer Ausführung der Erfindung erstreckt sich die Leitung 5, 13 als einstückiges Kabel durch das Gehäuse der pyrotechnischen Einrichtung 11 hindurch. Bei einem bestimmten Betriebszustand, der beispielsweise durch Sensieren (mittels Sensorik) einer bestimmten Temperatur in oder an der Energiezelle und/oder in oder an dem Batterieladegerät gemessen und festgestellt werden kann, wird die pyrotechnische Trenneinrichtung 11 aktiviert, damit sie ihre pyrotechnische Wirkung entfalten kann und derart auf die Leitung 5, 13 einwirkt, dass durch die pyrotechnische Wirkung die pyrotechnische Trennungseinrichtung 11 die elektrische Energieübertragefähigkeit der Leitung 5, 13 zumindest einschränkt, vorzugsweise vollständig unterbricht. Damit ist eine weitere Energiezuführung an die Batterie 3 unterbrochen und ein überkritischer Zustand verhindert.

Bei der in Fig. 1 dargestellten Ausführung ist die elektrische Leitung 5, 13 beispielsweise durch ein Kabel oder eine auf ein Substrat gedruckte Leiterbahn gebildet, welche durch ein pyrotechnisches Mittel dann gewollt unterbrochen wird, indem es durch die Entfaltung der pyrotechnischen Wirkung des pyrotechnischen Mittels thermisch umgesetzt wird und keine elektrische Leitfähigkeit die elektrische Leitung 5 mehr bereitstellt, so dass die Energiezelle 3 von dem Ladegerät 7 elektrisch und "ladungstechnisch" getrennt ist.

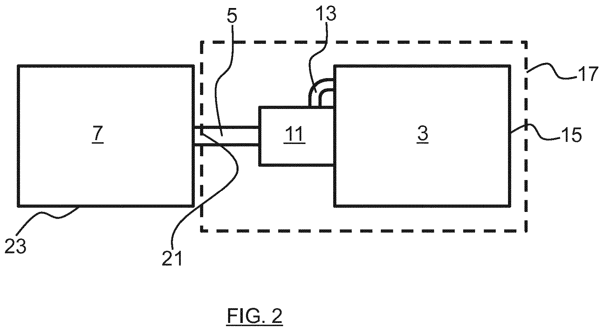

Bei dem in Fig. 2 dargestellten erfindungsgemäßen System werden für gleiche und ähnliche Bestandteile die gleichen Bezugszeichen verwendet, wie sie bereits in Fig. 1 eingesetzt sind.

Das elektrische Ladegerät 7 ist über die Leitung 5 beispielsweise in Form eines Ladekabels mit der erfindungsgemäßen pyrotechnischen Trennungseinrichtung 11 verbunden, welche direkt an einem Außenanschluss der zu beladenden Batterie 3 angebracht ist, so dass aufgrund eines direkten Berührungskontakts des pyrotechnischen Trennungsmittels die an der Außenseite der Batterie herrschenden Temperaturen mitgeteilt werden können. Von der pyrotechnischen Trennungseinrichtung 11 zweigt die Leitung 13 ab, um elektrische Energie des Ladegeräts 7 bei der "unversehrten" pyrotechnischen Trennungseinrichtung 11 der Batterie 3 zuzuführen. Gleich wie bei der Ausführung nach Fig. 1 wird bei Erreichung des vorbestimmten Betriebszustands, beispielsweise bei Erreichen einer maximal zulässigen Außentemperatur an der Außenseite des Gehäuses 15 der Batterie 3, welche insbesondere von einem Sensor gemessen ist, der entweder in der Batterie 3, an der Außenseite der Batterie 15 oder innerhalb der pyrotechnischen Trennungseinrichtung 11 angeordnet ist, oder welche materialimmanent ein Selbstauslösen des pyrotechnischen Mittels auslöst, das pyrotechnische Mittel der pyrotechnischen Trenneinrichtung 11 umgesetzt.

Die weitere Besonderheit der Ausführung des Ladesystems für eine elektrische Energiequelle nach Fig. 2 besteht darin, dass die erfindungsgemäße pyrotechnische Trennungseinrichtung 11 und die Energiezelle in einem gemeinsamen Gehäuse 17, das strichliert ist, untergebracht sind, so dass das erfindungsgemäße Ladesystem als Einheit mit einem gemeinsamen Gehäuse aufbaubar ist. Das Gehäuse 17 hat einen Anschluss 21, an dem das Ladegerät 7 entweder direkt mittels eines entsprechend geformten Steckers unter Ausbildung einer elektrischen Ladungskopplung mit der Leitung 5 oder über ein mit dem Ladegerät 7 koppelbaren Verbindungsleitung (nicht näher dargestellt) elektrisch verbunden werden kann. Es sei klar, dass ein kritischer Betriebszustand auch dadurch identifiziert werden kann, dass eine kritische Temperatur im Bereich des Ladegeräts 7 erfasst werden kann. Vorzugsweise ist das gemeinsame Gehäuse 17 ein Gehäuse eines Mobilgeräts, wie eines Handys.

Der kritische Betriebszustand muss nicht notwendigerweise über Temperatur, insbesondere durch Erreichen einer maximalen Temperatur, identifiziert werden, sondern auch andere messbare Betriebsparameter können herangezogen werden, um einen kritischen Betriebszustand des Ladegeräts 7 und/oder der Batterie 3 zu erfassen.

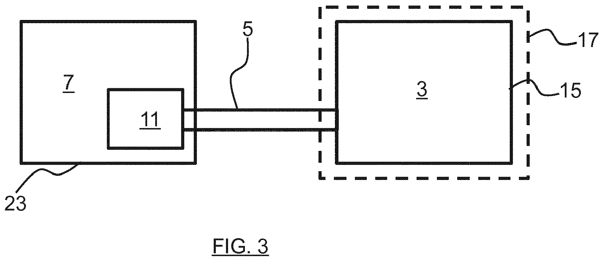

In Fig. 3 wird eine weitere Ausführung des erfindungsgemäßen Systems 1 zum elektrischen Laden einer elektrischen Energiezelle dargestellt, wobei das erfindungsgemäße System 1 nunmehr eine Anordnung der pyrotechnischen Trennungseinrichtung 11 innerhalb des Gehäuses 23 des Ladegeräts 7 vorsieht. Diese Ausführung ist insbesondere dann von Vorteil, wenn eine Zerstörung der elektrischen Energiezelle 3 und/oder deren Umgebung und/oder der Leitung 5, 13 vermieden werden soll.

Wie in Fig. 3 ersichtlich ist, enthält das Mobilgerät-Gehäuse 17 nicht mehr die pyrotechnische Trennungseinrichtung 11. Auch im Gegensatz zu der Ausführung nach Fig. 1 ist die pyrotechnische Trennungseinrichtung 11 nicht mehr zwischen dem Ladegerät 7 und der Batterie 3 angeordnet, also nicht außerhalb beider Gehäuse 23, 17 im Bereich der Ladeverbindung 5, sondern im Gehäuse 23 des Ladegeräts 7.

Die pyrotechnische Trennungseinrichtung 11 ist derart innerhalb des Ladegeräts 7 angeordnet, dass nach Entfaltung der pyrotechnischen Wirkung des pyrotechnischen Mittels 53 der Trennungseinrichtung 11 die Funktionsfähigkeit des Ladegeräts 7 bezüglich Ladens eingeschränkt oder vollständig aufgehoben ist.

Das Auslösen der pyrotechnischen Trennungseinrichtung 11 gemäß der Ausführung des Systems nach Fig. 3 kann ebenfalls temperaturabhängig sein oder auch abhängig von einem als kritisch sensierten Ladestrom 5 innerhalb des Ladegeräts 7 an der Energiezelle 3 veranlasst sein.

Es sei klar, dass die erfindungsgemäße pyrotechnische Trennungseinrichtung 11 nicht notwendigerweise durch Betriebszustände eines Bauteils ausgelöst werden muss, das sich innerhalb eines der oben beschriebenen Bestandteile des Systems, nämlich Ladegerät 7, Leitung 5, 13 oder Batterie 3 befindet. Es sei klar, dass auch eine externe Steuereinrichtung (nicht dargestellt) dazu ausgelegt sein kann, das Auslösen des pyrotechnischen Mittels der Trenneinrichtung 11 zu veranlassen. Beispielsweise kann die pyrotechnische Trenneinrichtung auch mit einem Signalempfänger versehen sein, der bei Empfang eines entsprechenden Steuersignals das Auslösen der pyrotechnischen Trennungseinrichtung 11 unabhängig von dem Erfassen von spezifischen Betriebsparametern eines der Bestandteile des erfindungsgemäßen Systems 1 veranlasst. Bei den Ausführungen gemäß Fig. 1, 2 und 3 kann das Auslösesignal von einer Leitwarte an die pyrotechnische Trennungseinrichtung 11 versendet werden. Eine besonders einfache Steuereinrichtung (nicht dargestellt) kann dadurch erreicht werden, dass eine elektrisch ansteuerbare Zündkapsel in der Nähe des pyrotechnischen Mittels der pyrotechnischen Trennungseinrichtung 11 angeordnet wird. Bei Empfang eines festgelegten elektrischen Auslösesignals, setzt die Spreng- oder Zündkapsel um und veranlasst die pyrotechnische Entfaltung des pyrotechnischen Mittels der Trennungseinrichtung 11.

Für alle der drei oben genannten erfindungsgemäßen Systeme 1 kann als elektrisches Gerät, das von dem System geladen werden soll, ein mobiles Telefon herangezogen werden, das insbesondere im Bereich der wiederbeladbaren Batterie die pyrotechnische Trenneinrichtung 11 aufweist. Es sei klar, dass die pyrotechnische Einrichtung 11 auch im Ladekabel untergebracht sein kann, beispielsweise an dem ladegerätseitigen Stecker, wie dem USB-Stecker, oder dem telefonseitigen Stecker. Dabei kann der kritische Betriebszustand sowohl durch das Ladegerät 7 erfasst werden als auch durch das Mobiltelefon, das anschließend bei Erreichen der kritischen Betriebstemperatur das Auslösen des pyrotechnischen Mittels 53 innerhalb der pyrotechnischen Trennungseinrichtung 11 veranlasst.

Insbesondere bei der Anordnung der pyrotechnischen Trennungseinrichtung 11 im Ladekabel oder im Bereich des Ladegeräts 7, ist eine Zerstörung von Umgebung von empfindlichen Bauteilen des Mobiltelefons vermieden. Um vom Ladegerät 7 und Ladekabel unabhängig zu sein, ist es allerdings von Vorteil der Erfindung, wenn die pyrotechnische Trennungseinrichtung 11 individuell innerhalb des Mobilgeräts benachbart der zu beladenden Energiezelle untergebracht ist.

Die in Fig. 2 und 3 dargestellten schematisch angedeuteten Gehäuse 17 könnten als Außengehäuse des Mobilgeräts verstanden sein. Andere elektrische Geräte mit wiederbeladbarer Batterie können von dem erfindungsgemäßen System und der erfindungsgemäßen pyrotechnischen Trennungseinrichtung profitieren.

Es sei klar, dass die Leitung 5 selbst die erfindungsgemäße Trennungseinrichtung bilden kann, ohne dass notwendigerweise das System an die wieder zu beladende Energiezelle oder dem Ladegerät 7 angeschlossen sein muss.

Die erfindungsgemäße zu trennende oder zu zerstörende Leitung 5, 13 kann beispielsweise durch ein Ladekabel gebildet sein, wobei die pyrotechnische Trennungseinrichtung 11 entweder im Verlauf des Kabels angeordnet sein kann oder im Bereich der Gehäuseabteile für den Stecker batterieseitig und/oder ladegerätseitig. Mit der pyrotechnischen Trennungseinrichtung 11 im Bereich der Leitung 5 gemäß Fig. 1 ist ein schonendes Trennen im kritischen Betriebszustand sowohl für das Ladegerät 7 als auch für die elektrische Energiezelle 3 gewährleistet. Die systemgemäße Leitung 5, 13 muss nicht notwendigerweise mit jeweiligen zwei Steckern realisiert sein, sondern kann auch lediglich durch ein Einsteckende bereitgestellt sein, wobei das andere Steckende bereits (untrennbar) mit dem Ladegerät 7 und/oder der elektrischen Energiezelle verbunden ist. Des Weiteren kann die erfindungsgemäße Ladeverbindung dadurch realisiert sein, dass die elektrische Energiezelle elektromagnetisch, insbesondere kontaktlos, geladen wird. Bei einer derartigen Ladekopplung kann die pyrotechnische Trennungseinrichtung 11 entweder im Bereich, insbesondere im Gehäuse, der elektrischen Energiezelle 3 oder des Ladegeräts 7 angeordnet sein. Eine derartige Ladekopplung würde das System nach Fig. 2 und 3 betreffen.

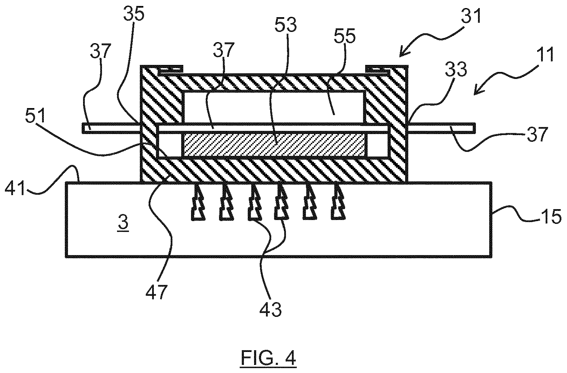

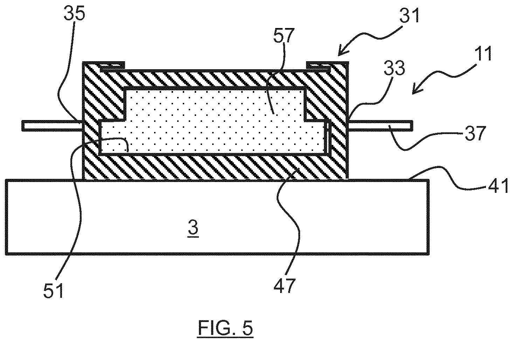

In Fig. 4 und 5 ist eine erfindungsgemäße pyrotechnische Trennungseinrichtung 11 im Detail dargestellt, wobei in Fig. 4 die pyrotechnische Trennungseinrichtung 11 vor dem Auslösen der pyrotechnischen Wirkung darstellt, während Fig. 5 die pyrotechnische Trennungseinrichtung nach deren Entfaltung der pyrotechnischen Wirkung zeigt.

Die erfindungsgemäße pyrotechnische Trennungseinrichtung 11 umfasst ein Gehäuse oder einen geschlossenen Behälter 31, der insbesondere aus einem starren Material, wie Kunststoff oder Metall, gebildet sein kann. Der Behälter 31 kann als hermetisch abgeschlossenes Gehäuse verstanden sein, das einen Eingang 33, 35 und einen Ausgang 35, 33 aufweist, durch den hindurch ein Ladekabel 37 als elektrische Leitung fluiddicht hindurchgeführt ist, um die elektrische Energiezelle 3 mit dem Ladegerät 7 zu verbinden. In der in Fig. 4 dargestellten Ausführung ist die elektrische Energiezelle, nämlich eine wiederaufladbare Batterie 3, dargestellt, an dessen Außengehäuse 15 an einer Oberseite 41 der Behälter 31 angeordnet, insbesondere angeklebt, ist. Der Eingang/Ausgang 35, 33 kann als Stecker gebildet sein, in den von außen eingesteckt werden kann und an dem innenseitig der interne Verbindungsabschnitt 37 angeschlossen ist.

Dabei kann die Stelle der Anordnung des Behälters 31 an der Außenseite des Gehäuses 15 der wiederaufladbaren Batterie 3 derart gewählt sein, dass gemäß Erfahrungswerte die während des Ladens am stärksten erwärmte Wärmesenke gewählt wird. Die von der Batterie 3 abgegebene Wärme während des elektrischen Ladens ist durch die sechs Blitze 43, schematisch realisiert.

Das Behältnis hat einen Boden 47, der in direktem Kontakt mit der Außenseite 41 des Gehäuses 15 der Batterie 3 steht. Die von der Batterie abgegebene Wärme 43 wird unmittelbar in dem Boden 47 des Behälters 31 eingeleitet. Der Boden 47 besteht aus einem wärmeleitfähigen Material, wie Metall. An der Innenseite 51 des Bodens 47 ist ein pyrotechnisches Mittel 53 angeordnet, das gemäß der Ausführung nach Fig. 4 (5) ein thermisches Frühzündmittel ist. Für das pyrotechnische Mittel 53 werden Stoffe oder Stoffgemische eingesetzt, die eine pyrotechnische Wirkung entfalten können.

Die Stoffe oder Stoffgemische für das pyrotechnische Mittel werden derart eingestellt, dass eine vorbestimmte Entzündungstemperatur oder Verpuffungstemperatur beispielsweise über etwa 80°C, 90°C, 100°C, 130°C, 150°C oder 180°C festgelegt ist. Ein solches pyrotechnisches Mittel 53 ist in Fig. 4 als Paket auf der Innenseite 51 des Bodens 47 angeordnet und steht in Kontakt mit dem Kabel 37, wobei das pyrotechnische Mittel von Luft und gegebenenfalls weiteren Additiven umgeben ist. Hierfür ist ein Freiraum im Gehäuse vorzusehen, der mindestens genauso dimensioniert ist wie das Volumen für das unaktivierte pyrotechnische Paket. Das pyrotechnische Paket belegt über 50 % der Gesamtfläche der Innenseite 51 des Bodens 47. Auf diese Weise ist beim Umsetzen des pyrotechnischen Mittels 53 eine Umsetzrichtung in den Freiraum gewährleistet, wo sich das umzusetzende Verbindungskabel 37 befindet.

Der Ein- und Ausgang 33, 35 ist von dem Durchführungskabel 37 belegt, wobei ein möglichst dichter Abschluss realisiert ist.

Wie in Fig. 4 dargestellt ist, entwickelt die Batterie 3 Wärme 43, welche über den Boden 47 dem pyrotechnischen Mittel 53, also den pyrotechnischen Stoffen oder Stoffgemischen, zugeführt ist. Bei der Ausführung gemäß Fig. 4 (und 5) ist das pyrotechnische Mittel ein sogenanntes Frühzündmittel, beispielsweise eine Nitrocellulose, daraus abgeleitete Treibladungspulver oder Mischungen auf Basis von Nitrotriazolon und Guanidinnitrat. Beispiele für ein derartiges Frühzündmittel ist in DE 197 30 873 A1 aufgeführt. Diese Mischungen zeigen eine Entzündungstemperatur von ca. 150°C bis 170°C. Dabei sollte das Frühzündmittel vorzugsweise langzeitstabil sein. Als Frühzündmittel können auch Azotetrazolate als Komponente eingesetzt werden. Insbesondere werden dabei als Azotetrazolat-Komponente Aminoguandin-5,5'-azotetrazolat (C₄H₁₄N₁₈), kurz AGATZ, und Guanidin-5,5'-azotetrazolat (C₄,H₁₂N₁₆), kurz GATZ, eingesetzt. In diesem Zusammenhang sei auf die europäische Patentanmeldung mit der Veröffentlichungsnummer EP 1 890 986 B1, welche auf die internationale Patentanmeldung WO 2006/128910 und den deutschen Patentanmeldungen DE 10 2005 025 746 und DE 10 2006 013 622 zurückgeht, verwiesen.

Des Weiteren können ein thermisches Frühzündmittel 2-[Bis- (2, 4, 6-trinitrophenyl)] aminoethylnitrat, kurz als Dipikrylaminoethylnitrat (DPN) bezeichnet, eingesetzt werden. Diese Substanz kann entweder alleine oder in Mischungen mit weiteren Komponenten verwendet werden. DPN kann aus 2, 4-Dinitrochlorbenzol und Ethanolamin mit anschließender Nitrierung hergestellt werden (Lit.: R. V. Clark, Ind. Eng. Chem., 25, 1385 (1933)). Bezüglich dieser thermischen Frühzündmittel sei auf die veröffentlichte Patentanmeldung WO 2005/058775 und den Prioritätsanmeldungen DE 103 59 536.8 und DE 10 2004 045 900.2 verwiesen, die hierin unter Bezugnahme eingearbeitet sein sollen.

Nachdem der kritische Betriebszustand erreicht ist, beispielsweise eine Betriebstemperatur von 155°C, 160°C, 170°C, 180°C, 200°C, wird aufgrund der Frühzündeigenschaften des thermischen Frühzündmittels das pyrotechnische Mittel 53 umgesetzt. Die pyrotechnische Wirkung lässt das Kabel vollständig zersetzen, wie in Fig. 5 dargestellt ist, und es verbleiben Verbrennungsgasbestandteile übrig, wobei eine elektrische Kopplung zwischen dem eingangsseitigen Kabel und dem ausgangsseitigen Kabel ausgeschlossen ist.

Diese Verbrennungsbestandteile sind in Fig. 5 im Allgemeinen mit der Bezugsziffer 57 versehen. Der Behälter 31 lässt eine pyrotechnisch begrenzte Entfaltung zu, welche durch das starre Gehäuse/Behälter 31 festgelegt ist. Auf diese Weise ist die Umgebung der pyrotechnischen Trennungseinrichtung 11 vor der pyrotechnischen Wirkung weitestgehend geschützt, insbesondere die Batterie 3 und die elektrischen Anschlüsse im Anschluss an der pyrotechnischen Trennungseinrichtung.

Im Gegensatz zu der Ausführung nach Fig. 4 und 5 kann die pyrotechnische Trennungseinrichtung 11 auch unabhängig von einem thermischen Frühzündmittel, wie oben beschrieben ist, gebildet sein. Vielmehr können klassische pyrotechnische Stoffe und Stoffgemische eingesetzt werden, ohne eine vorbestimmte Auslösetemperatur oder zumindest einen vorbestimmten Auslösetemperaturbereich.

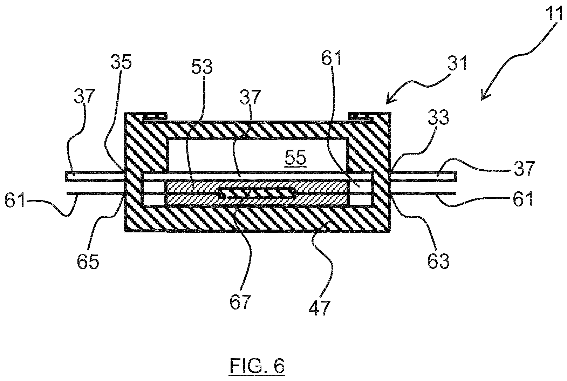

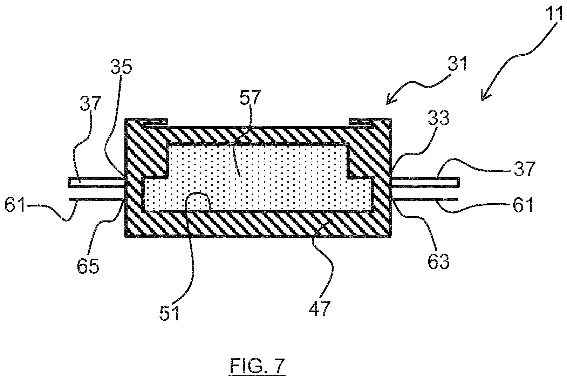

Die nun beschriebene Ausführung gemäß Fig. 6 und 7 kann eine pyrotechnische Trennungseinrichtung 11 betreffen, die speziell zu bestimmten Zeitpunkten und temperaturunabhängig Betriebssituationen präzise angesteuert und ausgelöst werden können.

Zur besseren Lesbarkeit der Figurenbeschreibung werden für ähnliche und identische Bestandteile der erfindungsgemäßen pyrotechnischen Trennungseinrichtung 11 nach Fig. 4 und 5 die gleichen Bezugsziffern für die Ausführungen nach Fig. 6 und 7 verwendet.

Die pyrotechnische Trennungseinrichtung 11 gemäß Fig. 6 unterscheidet sich von der pyrotechnischen Trennungseinrichtung 11 gemäß Fig. 4 dadurch, dass neben dem Eingang/Ausgang 33, 35 zum Durchführen des elektrischen Verbindungskabels 37 ein zusätzliches Aktivierungsmittel aufweist. Das Aktivierungsmittel kann auch eine Steuerungsfunktion aufweisen, welche von einem externen Mikrorechner kontrolliert wird. Im Allgemeinen hat das Aktivierungsmittel ein Auslösekabel 61, das sich durch einen zusätzlichen Eingang und Ausgang 63, 65 insbesondere unterhalb des Verbindungskabels 37 durch den Innenraum 55 des Behälters 31 erstreckt.

Dabei ist das Auslösekabel 61 derart innerhalb dem Behälter 31 angeordnet, dass es durch das Paket des pyrotechnischen Mittels 53 hindurchführt. Etwa im Zentrum der pyrotechnischen Packung 53 ist ein Heizelement, beispielsweise ein elektrischer Widerstand, angeordnet, das aufgrund eines Aktivierungsstroms, der über das Aktivierungskabel 61 zugeführt wird, erhitzt werden kann. Bei dieser Ausführung ist es nicht nötig, eines der oben genannten thermischen Frühzündmittel einzusetzen, um ein vorbestimmtes Entfalten der pyrotechnischen Wirkung des pyrotechnischen Mittels 53 zuzulassen.

Die Erwärmung des Heizelements 67 erfolgt durch Bestromung, beispielsweise durch ein entsprechendes elektrisches Signal, das distal der pyrotechnischen Trennungseinrichtung 11 erzeugt werden kann. Auf diese Weise ist die Betätigung der pyrotechnischen Trennungseinrichtung 11 unabhängig von der Position der zu beladenden Batterie 3 oder des Ladegeräts 7 ermöglicht.

Es sei klar, dass auch andere Aktivierungsmittel innerhalb des pyrotechnischen Mittels angeordnet sein können, um ein Auslösen der pyrotechnischen Wirkung des pyrotech-Mittels 53 zu erreichen. Beispielsweise kann eine Sprengkapsel oder ein Zündhütchen eingesetzt werden, um das weitere Umsetzen der pyrotechnischen Substanz des pyrotechnischen Mittels 53 zu veranlassen.

Gemäß Fig. 5 und 7 ist bei Entfaltung des pyrotechnischen Mittels das Verbindungskabel 37 vollständig umgesetzt, wie auch das Aktivierungskabel und das Heizelement (gemäß Fig. 6), das aufgrund der hohen thermischen Energie bei Auslösung der pyrotechnischen Wirkung vollständig zersetzt wird. Innerhalb des Behältnisses sind dann Verbrennungsgas sowie Restbestandteile der verbrannten Elemente enthalten.

In diesem Zusammenhang kann es notwendig sein, den Behälter hermetisch so dicht wie möglich abzudichten, um ein unkontrolliertes Verlassen der Verbrennungsgase außerhalb des Behälters zu vermeiden.

### Bezugszeichenliste

- 1: Ladesystem
- 3: Batterie
- 5, 13: elektrische Verbindung/Leitung
- 7: Ladegerät
- 11: pyrotechnische Trennungseinrichtung
- 15: Batteriegehäuse
- 17: Mobilgerätgehäuse
- 23: Ladegerätgehäuse
- 21: Anschluss
- 31: Behälter / Gehäuse der pyrotechnischen Trennungseinrichtung
- 33,35: Eingang/Ausgang
- 37: Ladekabel
- 41: Oberseite
- 43: Wärme
- 47: Boden
- 51: Bodeninnenseite
- 53: pyrotechnisches Mittel
- 55: Behälterinnenraum
- 57: Verbrennungsbestandteile
- 61: Auslösekabel
- 67: Heizelement

## Patentansprüche

1. Pyrotechnische Trennungseinrichtung (11) zum Beeinträchtigen einer elektrischen Ladekopplung zwischen einer aufladbaren elektrischen Energiezelle, die einen elektrochemischen Energiespeicher und einen Energiewandler umfasst, und einer elektrischen Energieversorgung, umfassend:
einen elektrisch leitfähigen Verbindungsabschnitt, über den elektrische Ladeenergie von der Energieversorgung der elektrischen Energiezelle zugeführt ist,
ein Gehäuse (31), in dem der Verbindungsabschnitt angeordnet ist, und
ein in dem Gehäuse (31) und außerhalb des Verbindungsabschnitts untergebrachtes pyrotechnisches Mittel (53), das dazu ausgelegt ist und/oder derart ansteuerbar ist, dass es seine pyrotechnische Wirkung bei Erreichen eines vorbestimmten Betriebszustands entfaltet,
**dadurch gekennzeichnet, dass**
das pyrotechnische Mittel (53) derart direkt dem Verbindungsabschnitt zugeordnet ist, dass die pyrotechnische Wirkung des pyrotechnischen Mittels (53) direkt die elektrische Leitfähigkeit des Verbindungsabschnitts innerhalb des Gehäuses (31) zumindest einschränkt.

2. Pyrotechnische Trennungseinrichtung (11) nach Anspruch 1, bei der das Gehäuse (31) wenigstens einen energiezellenseitigen und einen ladegeräteseitigen Anschluss (33, 35) aufweist, über den der Verbindungsabschnitt einerseits mit der Energiezelle andererseits mit der Energieversorgung verbindbar und/oder verbunden ist, wobei der jeweilige Anschluss als Stecker, der mit dem Verbindungsabschnitt verbunden ist und/oder über den eine externe elektrische Leitung anschließbar oder angeschlossen ist, oder als Durchgang (33, 35) in einer Wand des Gehäuses (31) ausgebildet ist, durch den hindurch sich eine Verlängerung des elektrisch leitfähigen Verbindungsabschnitts erstreckt.

3. Pyrotechnische Trennungseinrichtung (11) nach Anspruch 1, bei der das pyrotechnische Mittel (53) ein thermisches Frühzündmittel umfasst, das bei Überschreitung einer Betriebstemperatur, beispielsweise von 100 °C, 125 °C, 150 °C, 160 °C, 170 °C, 180 °C, 190 °C oder 200 °C, der das pyrotechnische Mittel (53) ausgesetzt ist, umsetzt, wobei das vorbestimmte Entfalten der pyrotechnischen Wirkung dadurch erreicht ist, dass das pyrotechnische Mittel (53) benachbart einer Wärmequelle angeordnet ist, welche ein Charakteristikum für einen kritischen Betriebszustand ist, wobei das Gehäuse einen Wandabschnitt aufweist, an dem gehäuseinnenseitig das pyrotechnische Mittel (53) berührend angeordnet ist und/oder außenseitig im Bereich einer Wärmequelle und/oder an einer Außenseite des Zellengehäuses der Energiezelle angebracht ist.

4. Pyrotechnische Trennungseinrichtung (11) nach einem der vorstehenden Ansprüche, bei der das Gehäuse (31) ein Gesamtinnenvolumen aufweist, von dem das pyrotechnische Mittel (53) nicht mehr als 60 % einnimmt, wobei der von dem pyrotechnischen Mittel (53) freien Volumenbereich mit Gas gefüllt ist.

5. Pyrotechnische Trennungseinrichtung (11) nach einem der vorstehenden Ansprüche, bei der eine Steuerung zum Auslösen der pyrotechnischen Wirkung des pyrotechnischen Mittels (53) in dem Gehäuse vorgesehen ist, wobei die Steuerung in Kontakt mit dem pyrotechnischen Mittel (53) steht und in dem pyrotechnischen Mittel eingebettet ist, wobei die Steuerung durch ein Heizelement (67) gebildet ist, wobei die Steuerung eine Steuerleitung aufweist, welche sich durch einen Steueranschluss von außerhalb des Gehäuses (31) in das Gehäuse (31) erstreckt und mit der Steuerung gekoppelt ist, wobei der Steueranschluss als Stecker, an dem die interne Steuerleitung angeschlossen ist und/oder über den eine externe elektrische Leitung anschließbar ist, oder als Durchgang in einer Wand des Gehäuses (31) ausgebildet ist, durch den hindurch sich die Steuerleitung erstreckt.

6. System zum elektrischen Laden einer elektrischen Energiezelle, umfassend: eine nach einem der vorstehenden Ansprüche ausgebildete, pyrotechnische Trennungseinrichtung (11), eine elektrische Energiezelle und ein elektrisches Ladegerät (7), wobei die Energiezelle durch das Ladegerät (7) über eine elektrische Verbindung geladen werden kann, wobei die pyrotechnische Trennungseinrichtung (11) in die elektrische Verbindung integriert ist, sodass beim Auslösen der pyrotechnischen Trennungseinrichtung (11) die elektrische Verbindung zwischen der Energiezelle und dem Ladegerät (7) unterbrochen ist.

7. Mobilgerät mit einer elektrisch aufladbaren Energiezelle, einem Gerätegehäuse (17), in dem die Energiezelle vollständig untergebracht ist und das einen Anschluss aufweist, an dem ein elektrisches Ladegerät (7) anschließbar ist, wobei in dem Gerätegehäuse (17) des Mobilgeräts eine nach einem der Ansprüche 1 bis 6 ausgebildete pyrotechnische Trennungseinrichtung (11) derart angeordnet ist, dass dessen pyrotechnische Wirkung bei Erreichen eines vorbestimmten Betriebszustands eine elektrische Verbindung zwischen dem Anschluss und der Energiezelle unterbricht.

8. Ladegerät zum Aufladen einer elektrisch aufladbaren Energiezelle, umfassend ein Gerätegehäuse (23), das einen Anschluss aufweist, an dem die Energiezelle anschließbar ist, wobei in dem Gerätegehäuse (23) des Ladegeräts (7) eine nach einem der Ansprüche 1 bis 6 ausgebildete pyrotechnische Trennungseinrichtung (11) derart angeordnet ist, dass dessen pyrotechnische Wirkung bei Erreichen eines vorbestimmten Betriebszustands eine elektrische Verbindung in dem Gerätegehäuse (23) zwischen dem Anschluss und der Energiezelle unterbricht.

9. Pyrotechnische Trennungseinrichtung (11) zum Beeinträchtigen einer elektrischen Kopplung an eine elektrische Energieversorgung, umfassend:
einen elektrisch leitfähigen Verbindungsabschnitt, über den elektrische Energie von der Energieversorgung leitbar ist,
ein Gehäuse (31), in dem der Verbindungsabschnitt angeordnet ist, und
ein in dem Gehäuse (31) und außerhalb des Verbindungsabschnitts untergebrachtes pyrotechnisches Mittel (53), das dazu ausgelegt ist und/oder derart ansteuerbar ist, dass es seine pyrotechnische Wirkung bei Erreichen eines vorbestimmten Betriebszustands entfaltet,
wobei das pyrotechnische Mittel (53) derart direkt dem Verbindungsabschnitt zugeordnet ist, dass die pyrotechnische Wirkung des pyrotechnischen Mittels (53) direkt die elektrische Leitfähigkeit des Verbindungsabschnitts innerhalb des Gehäuses (31) zumindest einschränkt.

10. Pyrotechnische Trennungseinrichtung (11) nach Anspruch 9, bei der das Gehäuse (31) wenigstens zwei Anschlüsse (33, 35) aufweist, über die der Verbindungsabschnitt jeweils mit einem elektrischen Bauteil verbindbar und/oder verbunden ist, wobei der jeweilige Anschluss als Stecker, der mit dem Verbindungsabschnitt verbunden ist und/oder über den eine externe elektrische Leitung anschließbar oder angeschlossen ist, oder als Durchgang (33, 35) in einer Wand des Gehäuses (31) ausgebildet ist, durch den hindurch sich eine einstückige Verlängerung des elektrisch leitfähigen Verbindungsabschnitts erstreckt.

11. Pyrotechnische Trennungseinrichtung (11) nach Anspruch 9 oder 10, bei der das pyrotechnische Mittel (53) ein thermisches Frühzündmittel umfasst, das bei Überschreitung einer Betriebstemperatur, der das pyrotechnische Mittel (53) ausgesetzt ist, umsetzt, wobei das vorbestimmte Entfalten der pyrotechnischen Wirkung dadurch erreicht ist, dass das pyrotechnische Mittel (53) benachbart einer Wärmequelle angeordnet ist, welche ein Charakteristikum für einen kritischen Betriebszustand ist, wobei das Gehäuse einen Wandabschnitt aufweist, an dem gehäuseinnenseitig das pyrotechnische Mittel (53) berührend angeordnet ist und/oder außenseitig im Bereich einer Wärmequelle und/oder an einer Außenseite des Zellengehäuses eines elektrischen Bauteils angebracht ist.

12. Pyrotechnische Trennungseinrichtung (11) nach einem der Ansprüche 9 bis 11, bei der das Gehäuse (31) ein Gesamtinnenvolumen aufweist, von dem das pyrotechnische Mittel (53) nicht mehr als 60 % einnimmt aber mehr als 10 % einnimmt, wobei der von dem pyrotechnischen Mittel (53) freien Volumenbereich mit Gas gefüllt ist.

13. Pyrotechnische Trennungseinrichtung (11) nach einem der Ansprüche 9 bis 12, bei der eine Steuerung zum Auslösen der pyrotechnischen Wirkung des pyrotechnischen Mittels (53) in dem Gehäuse vorgesehen ist, wobei die Steuerung in Kontakt mit dem pyrotechnischen Mittel (53) steht und in dem pyrotechnischen Mittel eingebettet ist, wobei die Steuerung durch ein Heizelement (67) gebildet ist, wobei die Steuerung eine Steuerleitung aufweist, welche sich durch einen Steueranschluss von außerhalb des Gehäuses (31) in das Gehäuse (31) erstreckt und mit der Steuerung gekoppelt ist, wobei der Steueranschluss als Stecker, an dem die interne Steuerleitung angeschlossen ist und/oder über den eine externe elektrische Leitung anschließbar ist, oder als Durchgang in einer Wand des Gehäuses (31) ausgebildet ist, durch den hindurch sich die Steuerleitung erstreckt.

14. System zum elektrischen Laden einer elektrischen Energiezelle, umfassend eine nach einem der vorstehenden Ansprüche ausgebildete, pyrotechnische Trennungseinrichtung, eine elektrische Energieversorgungszelle, die über eine elektrische Verbindung elektrische Energie leiten kann, wobei die pyrotechnische Trennungseinrichtung (11) in der elektrischen Verbindung derart angeordnet ist, dass beim Auslösen der pyrotechnischen Trennungseinrichtung (11) die elektrische Verbindung zwischen der Energiezelle und dem Ladegerät (7) unterbrochen ist.

15. Elektrogerät mit einer elektrisch aufladbaren Energiezelle und einem Gerätegehäuse (17), in dem die Energiezelle vollständig untergebracht ist und das einen Anschluss aufweist, an dem ein elektrisches Ladegerät (7) oder ein elektrischer Verbraucher anschließbar ist, wobei in dem Gerätegehäuse (17) des Elektrogeräts eine nach einem der Ansprüche 9 bis 14 ausgebildete pyrotechnische Trennungseinrichtung (11) derart angeordnet ist, dass dessen pyrotechnische Wirkung bei Erreichen eines vorbestimmten Betriebszustands eine elektrische Verbindung zwischen dem Anschluss und der Energiezelle unterbricht.

16. System zum elektrischen Entladen einer elektrischen Energiezelle, umfassend eine nach einem der Ansprüche 9 bis 13 ausgebildete, pyrotechnische Trennungseinrichtung (11), eine elektrische Energiezelle und einen elektrischen Verbraucher, wobei die Energiezelle durch den Verbraucher über eine elektrische Verbindung entladen werden kann, wobei die pyrotechnische Trennungseinrichtung (11) in die elektrische Verbindung integriert ist, sodass beim Auslösen der pyrotechnischen Trennungseinrichtung (11) die elektrische Verbindung zwischen Energiezelle und Verbraucher beeinträchtigt ist.

## Claims

1. Pyrotechnical disconnection unit (11) for impairing an electrical charging coupling between a chargeable electrical energy cell, comprising an electrochemical energy storage and an energy converter, and an electrical energy supply, comprising:
an electrically conductive connection section, via which electrical charging energy is supplied from the energy supply of the electrical energy cell,
a housing (31) in which the connection section is arranged, and
a pyrotechnical means (53) being accommodated in the housing (31) and outside the connection section, being designed and/or being controllable in such a way that its pyrotechnical effect unfolds when reaching a predefined operational state,
**characterized in that**
the pyrotechnical means (53) is directly associated to the connection section in such a way that the pyrotechnical effect of the pyrotechnical means (53) is directly at least limiting the electrical conductivity of the connection section inside the housing (31).

2. Pyrotechnical disconnection unit (11) according to claim 1, the housing (31) having at least one energy cell sided and one charging device sided connection (33, 35), via which the connection section is connectable and/or connected on the one hand to the energy cell on the other hand to the energy supply, wherein the respective connection is formed as a plug, which is connected to the connection section and/or via which an external electrical lead is connectable or connected, or formed as a passage (33, 35) in a wall of the housing (31), through which an extension of the electrically conductive connection section is extending.

3. Pyrotechnical disconnection unit (11) according to claim 1, the pyrotechnical means (53) comprising a thermal pre-ignition means, which converts when exceeding an operational temperature, for example of 100°C, 125°C, 150°C, 160°C, 170°C, 180°C, 190°C or 200°C, which the pyrotechnical means (53) is exposed to, wherein the predefined unfolding of the pyrotechnical effect is achieved in that the pyrotechnical means (53) is arranged adjacent to a heat source, which is a characteristic for a critical operational state, wherein the housing having a wall section, on which at the inner side of the housing the pyrotechnical means (53) is arranged touchingly and/or is mounted on the outside in the area of a heat source and/or is mounted at an outer side of the cell housing of the energy cell.

4. Pyrotechnical disconnection unit (11) according to one of the preceding claims, the housing (31) having an overall internal volume, of which the pyrotechnical means (53) is not occupying more than 60%, wherein the volume space free of the pyrotechnical means (53) is filled with gas.

5. Pyrotechnical disconnection unit (11) according to one of the preceding claims, a control for initiating the pyrotechnical effect of the pyrotechnical means (53) is provided inside the housing, wherein the control is in contact with the pyrotechnical means (53) and embedded in the pyrotechnical means, wherein the control is formed by a heating element (67), wherein the control has a control lead, which is extending through a control connection from outside the housing (31) into the housing (31) and is coupled with the control, wherein the control connection is formed as a plug, to which the internal control lead is connected and/or via which an external electrical lead is connectable, or formed as a passage in a wall of the housing (31), through which the control lead is extending.

6. System for electrically charging an electrical energy cell, comprising: a pyrotechnical disconnection unit (11) formed according to one of the preceding claims, an electrical energy cell and an electrical charging device (7), wherein the energy cell can be charged by the charging device (7) via an electrical connection, wherein the pyrotechnical disconnection unit (11) is integrated into the electrical connection, so that the electrical connection between the energy cell and the charging device (7) is interrupted on initiation of the pyrotechnical disconnection unit (11).

7. Mobile device with an electrically chargeable energy cell, a device housing (17) in which the energy cell is accommodated completely and that has a connection, to which an electrical charging device (7) is connectable, wherein inside the device housing (17), of the mobile device, a pyrotechnical disconnection unit (11) formed according to one of the claims 1 to 6 is arranged in such a way that its pyrotechnical effect interrupts an electrical connection between the connection and the energy cell when reaching a predefined operational state.

8. Charging device for charging an electrically chargeable energy cell, comprising a device housing (23), having a connection, to which an energy cell is connectable, wherein the device housing (23) of the charging device (7) a pyrotechnical disconnection unit (11) formed according to one of the claims 1 to 6 in such a way that its pyrotechnical effect interrupts an electrical connection inside the device housing (23) between the connection and the energy cell when reaching a predefined operational state.

9. Pyrotechnical disconnection unit (11) for impairing an electrical coupling at an electrical energy supply, comprising:
an electrically conductive connection section, via which electrical energy is conductible from the energy supply,
a housing (31), in which the connection section is arranged, and
a pyrotechnical means (53) being accommodated in the housing (31) and outside the connection section, being designed and/or being controllable in such a way that its pyrotechnical effect unfolds when reaching a predefined operational state, wherein the pyrotechnical means (53) is directly associated to the connection section in such a way that the pyrotechnical effect of the pyrotechnical means (53) is directly at least limiting the electrical conductivity of the connection section inside the housing (31).

10. Pyrotechnical disconnection unit (11) according to claim 9, the housing having at least two connections (33, 35), via which the connection section is connectable and/or connected, respectively, to an electrical component, wherein the respective connection is formed as a plug, which is connected to the connection section and/or via which an external electrical lead is connectable or connected, or formed as a passage (33, 35) in a wall of the housing (31), through which a one-pieced extension of the electrically conductive connection section is extending.

11. Pyrotechnical disconnection unit (11) according to claim 9 or 10, the pyrotechnical means (53) comprising a thermal pre-ignition means that converts when exceeding an operational temperature, which the pyrotechnical means (53) is exposed to, wherein the predefined unfolding of the pyrotechnical effect is achieved in that the pyrotechnical means (53) is arranged adjacent to a heat source, which is a characteristic for a critical operational state, wherein the housing having a wall section on which at the inner side of the housing the pyrotechnical means is arranged touchingly and/or is mounted on the outside in the area of a heat source and/or is mounted at an outer side of the cell housing of an electrical component.

12. Pyrotechnical disconnection unit (11) according to one of the claims 9 to 11, the housing (31) having an overall internal volume, of which the pyrotechnical means (53) is not occupying more than 60%, but occupies more than 10%, wherein the volume space free of the pyrotechnical means (53) is filled with gas.

13. Pyrotechnical disconnection unit (11) according to one of the claims 9 to 12, a control for initiating the pyrotechnical effect of the pyrotechnical means (53) is provided inside the housing, wherein the control is in contact with the pyrotechnical means (53) and embedded in the pyrotechnical means, wherein the control is formed by a heating element (67), wherein the control has a control lead, which is extending through a control connection from outside the housing (31) into the housing (31) and is coupled with the control, wherein the control connection is formed as a plug, to which the internal control lead is connected and/or via which an external electrical lead is connectable, or formed as a passage in a wall of the housing (31), through which the control lead is extending.

14. System for electrically charging an electrical energy cell, comprising a pyrotechnical disconnection unit formed according to one of the preceding claims, an electrical energy supply cell, which can conduct electrical energy via an electrical connection, wherein the pyrotechnical disconnection unit (11) is arranged in the electrical connection in such a way that the electrical connection between the energy cell and the charging device (7) is interrupted on initiation of the pyrotechnical disconnection unit (11).

15. Electronic device with an electrically chargeable energy cell and a device housing (17), in which the energy cell is accommodated completely and that has a connection, to which an electrical charging device (7) or an electrical load is connectable, wherein a pyrotechnical disconnection unit (11) formed according to one of the claims 9 to 14 is arranged in the device housing (17) of the electric device in such a way that its pyrotechnical effect interrupts an electrical connection between the connection and the energy cell when reaching a predefined operational state.

16. System for electrically discharging an electrical energy cell, comprising a pyrotechnical disconnection unit (11) formed according to one of the claims 9 to 13, an electrical energy cell and an electrical load, wherein the energy cell can be discharged by the load via an electrical connection, wherein the pyrotechnical disconnection unit (11) is integrated in the electrical connection so that the electrical connection between energy cell and load is impaired on initiation of the pyrotechnical disconnection unit (11).

## Revendications

1. Dispositif séparateur pyrotechnique (11) permettant d'agir sur un appairage de charge électrique entre une cellule énergétique électrique chargeable qui comprend un accumulateur d'énergie électrochimique et un convertisseur d'énergie, et une alimentation en énergie électrique, comprenant :
une section de connexion conductrice d'électricité grâce à laquelle de l'énergie de charge électrique est acheminée par l'alimentation en énergie vers la cellule énergétique électrique,
un boîtier (31) dans lequel la section de connexion est disposée, et
un agent pyrotechnique (53) logé dans le boîtier (31) et à l'extérieur de la section de connexion et qui est conçu et/ou peut être commandé de manière à ce que son effet pyrotechnique se déploie lors de l'atteinte d'un état de fonctionnement prédéfini,
**caractérisé en ce que** l'agent pyrotechnique (53) est associé directement à la section de connexion de manière à ce que l'effet pyrotechnique de l'agent pyrotechnique (53) au moins restreigne directement la conductivité électrique de la section de connexion à l'intérieur du boîtier (31).

2. Dispositif séparateur pyrotechnique (11) selon la revendication 1, dans lequel le boîtier (31) présente au moins un raccordement au niveau de la cellule énergétique et au niveau de l'appareil de charge (33,35) grâce auquel la section de connexion est raccordable et/ou est raccordée d'une part à la cellule énergétique et d'autre part à l'alimentation électrique, le raccordement électrique respectif se présentant sous forme d'une prise qui est connectée à la section de connexion et/ou est connectable ou connectée par une ligne électrique externe, ou sous forme d'un passage (33,35) dans une paroi du boîtier (31) à travers lequel s'étend une rallonge de la section de connexion conductrice d'électricité.

3. Dispositif séparateur pyrotechnique (11) selon la revendication 1, dans lequel l'agent pyrotechnique (53) comprend un agent d'allumage anticipé thermique qui agit en cas de dépassement d'une température de fonctionnement, par exemple de 100 °C, 125 °C, 150 °C, 160 °C, 170 °C, 180 °C, 190 °C ou 200 °C, à laquelle l'agent pyrotechnique (53) est exposé, le déploiement prédéfini de l'effet pyrotechnique étant atteint du fait que l'agent pyrotechnique (53) est disposé à proximité d'une source de chaleur qui est une caractéristique d'un état de fonctionnement critique, le boîtier présentant une section de boîtier sur laquelle l'agent pyrotechnique (53) est disposé en contact avec intérieur du boîtier et/ou du côté extérieur au niveau d'une source de chaleur et/ou au niveau d'une face extérieure du boîtier de cellule de la cellule énergétique.

4. Dispositif séparateur pyrotechnique (11) selon des revendications précédentes, dans lequel le boîtier (31) présente un volume interne total dont l'agent pyrotechnique (53) n'occupe pas plus de 60 %, la partie du volume exempte de l'agent pyrotechnique (53) étant remplie de gaz.

5. Dispositif séparateur pyrotechnique (11) selon des revendications précédentes, dans lequel une commande de déclenchement de l'effet pyrotechnique de l'agent pyrotechnique (53) est prévue dans le boîtier, la commande étant en contact avec l'agent pyrotechnique (53) et encastrée dans l'agent pyrotechnique, la commande étant constituée par un élément chauffant (67), la commande présentant une ligne de commande qui s'étend à travers un raccordement de commande depuis l'extérieur du boîtier (31) jusque dans le boîtier (31) et étant couplée à la commande, le raccordement de commande se présentant sous forme d'une prise à laquelle la ligne de commande interne est raccordée et/ou raccordable par une ligne électrique externe, ou sous forme d'un passage dans une paroi du boîtier (31) à travers laquelle s'étend la ligne de commande.

6. Système de charge électrique d'une cellule énergétique électrique, comprenant : un dispositif séparateur pyrotechnique (11) réalisé selon une des revendications précédentes, une cellule énergétique électrique et un appareil de charge électrique (7), la cellule énergétique chargeable par l'appareil de charge (7) par une liaison électrique, le dispositif séparateur pyrotechnique (11) étant intégré dans la liaison électrique, de sorte que, au déclenchement du dispositif séparateur pyrotechnique (11), la liaison électrique entre la cellule énergétique et l'appareil de charge (7) est interrompue.

7. Appareil mobile comportant une cellule énergétique chargeable à l'électricité, un boîtier d'appareil (17) dans lequel la cellule énergétique est entièrement logée et qui présente un raccordement auquel un appareil de charge électrique (7) est raccordable, un dispositif séparateur pyrotechnique (11) réalisé selon une des revendications 1 à 6 étant disposé dans le boîtier d'appareil (17) de l'appareil mobile de manière à ce que son effet pyrotechnique interrompe une liaison électrique entre le raccordement et la cellule énergétique à l'atteinte d'un état de fonctionnement prédéfini.

8. Appareil de charge pour le chargement d'une cellule énergétique chargeable à l'électricité, comprenant un boîtier d'appareil (23) qui présente un raccordement auquel la cellule énergétique est raccordable, un dispositif séparateur pyrotechnique (11) réalisé selon une des revendications 1 à 6 étant disposés dans le boîtier d'appareil (23) de l'appareil de charge (7) de manière à ce que son effet pyrotechnique interrompe une liaison électrique dans le boîtier d'appareil (23) entre le raccordement et la cellule énergétique à l'atteinte d'un état de fonctionnement prédéfini.

9. Dispositif séparateur pyrotechnique (11) permettant d'agir sur un appairage de charge électrique avec une alimentation en énergie électrique, comprenant :
une section de connexion conductrice d'électricité grâce à laquelle de l'énergie de charge électrique peut être conduite par l'énergie électrique de l'alimentation électrique,
un boîtier (31) dans lequel la section de connexion est disposée, et
un agent pyrotechnique (53) logé dans le boîtier (31) et à l'extérieur de la section de connexion et qui est conçu et/ou peut être commandé de manière à ce que son effet pyrotechnique se déploie lors de l'atteinte d'un état de fonctionnement prédéfini,
l'agent pyrotechnique (53) étant associé directement à la section de connexion de manière à ce que l'effet pyrotechnique de l'agent pyrotechnique (53) au moins restreigne directement la conductivité électrique de la section de connexion à l'intérieur du boîtier (31).

10. Dispositif séparateur pyrotechnique (11) selon la revendication 9, dans lequel le boîtier (31) présente au moins deux raccordements (33,35) par lesquels la section de connexion est respectivement connectable et/ou connectée à une pièce électrique, le raccordement respectif se présentant sous forme d'une prise qui est connectée à la section de connexion et/ou est raccordable ou raccordée par une ligne électrique externe, ou d'un passage (33,35) dans une paroi du boîtier (31) à travers lequel une rallonge monobloc de la section de connexion conductrice d'électricité s'étend.

11. Dispositif séparateur pyrotechnique (11) selon la revendication 9 ou 10, dans lequel l'agent pyrotechnique (53) comprend un agent d'allumage anticipé thermique qui agit en cas de dépassement d'une température de fonctionnement à laquelle l'agent pyrotechnique (53) est exposé, le déploiement prédéfini de l'effet pyrotechnique étant atteint par le fait que l'agent pyrotechnique (53) est disposé à proximité d'une source de chaleur qui est une caractéristique d'un état de fonctionnement critique, le boîtier présentant une section de paroi sur laquelle l'agent pyrotechnique (53) est disposé en contact avec l'intérieur du boîtier et/ou à l'extérieur au niveau d'une source de chaleur et/ou sur une face extérieure du boîtier de cellule d'une pièce électrique.

12. Dispositif séparateur pyrotechnique (11) selon une des revendications 9 à 11, dans lequel le boîtier (31) présente un volume interne total dont l'agent pyrotechnique (53) n'occupe pas plus de 60 % mais plus de 10 %, la partie du volume exempte de l'agent pyrotechnique (53) étant remplie de gaz.

13. Dispositif séparateur pyrotechnique (11) selon une des revendications 9 à 12, dans lequel une commande de déclenchement de l'effet pyrotechnique de l'agent pyrotechnique (53) est prévue dans le boîtier, la commande étant en contact avec l'agent pyrotechnique (53) et encastrée dans l'agent pyrotechnique, la commande étant constituée par un élément chauffant (67), la commande présentant une ligne de commande qui s'étend à travers un raccordement de commande depuis l'extérieur du boîtier (31) jusque dans le boîtier (31) et étant couplée à la commande, le raccordement de commande se présentant sous forme d'une prise à laquelle la ligne de commande interne est raccordée et/ou raccordable par une ligne électrique externe, ou sous forme d'un passage dans une paroi du boîtier (31) à travers lequel s'étend la ligne de commande.

14. Système de chargement électrique d'une cellule énergétique électrique, comprenant un dispositif séparateur réalisé selon une des revendications précédentes, une cellule d'alimentation en énergie électrique qui peut conduire de l'énergie électrique par une liaison électrique, le dispositif séparateur pyrotechnique (11) étant disposé dans la liaison électrique de manière à ce que, lors du déclenchement du dispositif séparateur pyrotechnique (11), la liaison électrique entre la cellule énergétique et l'appareil de charge (7) soit interrompue.

15. Appareil électrique comportant une cellule énergétique chargeable à l'électricité et un boîtier d'appareil (17) dans lequel la cellule énergétique est entièrement logée et qui présente un raccordement auquel un appareil de charge électrique (7) ou un consommateur électrique est raccordable, un dispositif séparateur pyrotechnique (11) réalisé selon une des revendications 9 à 14 étant disposé dans le boîtier d'appareil (17) de l'appareil électrique de manière à ce que son effet pyrotechnique interrompe une liaison électrique entre le raccordement et la cellule énergétique à l'atteinte d'un état de fonctionnement prédéfini.

16. Système de chargement électrique d'une cellule énergétique électrique, comprenant un dispositif séparateur pyrotechnique (11) réalisé selon une des revendications 9 à 13, une cellule énergétique électrique et un consommateur électrique, la cellule énergétique pouvant être déchargée par le consommateur par l'intermédiaire d'une liaison électrique, le dispositif séparateur pyrotechnique (11) étant intégré dans la liaison électrique de manière à ce que, lors du déclenchement du dispositif séparateur pyrotechnique (11), la liaison électrique entre la cellule énergétique et le consommateur soit affectée.
